# EUROPÄISCHE PATENTSCHRIFT

(11) **EP 3 951 461 B1**
(45) Veröffentlichungstag und Bekanntmachung des Hinweises auf die Patenterteilung: **16.07.2025**
(21) Anmeldenummer: 21189153.6
(22) Anmeldetag: 02.08.2021
(51) Int. Cl.: G02B 6/42

(54) **LICHTPFAD ENTLANG EINES KREISBOGENS UND ÜBERTRAGUNG EINES SIGNALS ZWISCHEN ZWEI ZUEINANDER ROTIERENDEN EINHEITEN**
LIGHT PATH ALONG A CIRCULAR ARC AND TRANSMISSION OF A SIGNAL BETWEEN TWO MUTUALLY ROTATING UNITS
TRAJET LUMINEUX LE LONG D'UN ARC DE CERCLE ET TRANSMISSION D'UN SIGNAL ENTRE DEUX UNITÉS ROTATIVES

(30) Priorität: 06.08.2020 DE 102020210010; 04.12.2020 DE 102020215386
(43) Veröffentlichungstag der Anmeldung: 09.02.2022
(73) Patentinhaber: Fraunhofer-Gesellschaft zur Förderung der angewandten Forschung e.V., 80686 München (DE)
(72) Erfinder: SCHNEIDER, Tobias, 01109 Dresden (DE)
(74) Vertreter: Stöckeler, Ferdinand

(56) Entgegenhaltungen:
- DE-A1- 102008 021 290
- DE-A1- 102017 106 441
- DE-A1- 2 441 359
- US-A- 4 259 584
- US-A- 4 711 516
- US-B2- 10 466 077
- US-B2- 7 702 375
- US-B2- 8 374 506

## Beschreibung

### Technisches Gebiet

Beispiele der vorliegenden Offenbarung betreffen eine optische Vorrichtung mit einem Lichtpfad zum Leiten eines Lichtstrahls entlang eines Kreisbogens. Weitere Beispiele der vorliegenden Offenbarung betreffen ein Verfahren zum Übertragen eines Signals zwischen zwei zueinander rotierenden Einheiten unter Verwendung der optischen Vorrichtung.

Einige Beispiele der vorliegenden Offenbarung betreffen einen um eine Drehachse rotierenden optisch-drahtlosen Transceiver und/oder einen optischen drahtlosen Transceiver für Datenübertragung in 360° Rotation außerhalb einer freibleibenden Drehachse.

### Hintergrund

Die Erfindung beschäftigt sich mit dem Problem, Datenübertragung über zwei zueinander rotierende Bauteile zu ermöglichen. Dies ist mit Kabeln nicht oder nur sehr eingeschränkt möglich. Zusätzlich muss die Rotationsachse einsatzbedingt oft freibleiben. Dies ist zum Beispiel bei Computertomographen oder Motoren notwendig. Dabei wird ein besonderes Augenmerk auf das Erreichen einer möglichst hohen Übertragungsbandbreite gelegt (>=1 Gbps).

Aktuelle industrielle Systeme basieren auf Datenübertragung mittels elektrischer Kabel. An den Rotationsstellen wird mit Schleifringen und Kontaktbürsten gearbeitet. Diese Systeme haben bauartbedingt eine begrenzte Lebensdauer durch den Verschleiß der Kontakte. Weiter werden RF basierte Hohleitersysteme verwendet, in welchen ein RF funkbasiertes Signal in einem Hohlleiter geführt wird. Vereinzelt gibt es auch Patente welche optische Datenübertragung verwenden.

Durch die allseitige Signalausbreitung des elektrischen Signals/RF Funksignals auf dem Schleifring und im Hohlleiter kommt es zu Mehrwegausbreitung. Das führt zu erheblichen Laufzeitunterschieden und einer Limitierung der Übertragungsbandbreite. Am Markt übliche System ermöglichen Datenraten im Bereich von etwa 100Mbit/s. Das Patent DE 10 2007 041 927 A1 beschäftigt sich ebenfalls mit dem Problem und will dieses durch eine Anpassung von Lichtwellenleitern, idealer Weise Single-Mode Fasern, mit einem Kerndurchmesser von 10µm, lösen. Die dünnen Fasern werden dabei so angepasst, dass zusätzlich zur Ein/Auskopplung an der Stirnseite auch lateral Licht ein- oder ausgekoppelt werden kann. Dieser Ansatz basiert auf dem Wellencharakter des Lichts. In einem weiteren Patent (DE 28 46 526 A1) wird eine prinzipielle Vorrichtung zur optischen Datenübertragung in einem Computertomographen beschrieben. Dasselbe gilt für US 4109997, worin Datenraten von 1 Mbit/s bis 30 Mbit/s angepeilt werden. Ein weiteres Patent US 2004/0062344 A1 bildet einen metallisch reflektierenden Hohlleiter in einem Kugelgelagerten Stator Rotorsystems aus, um darin Daten zu übertragen.

Die US 4,259,584 zeigt einen lichtleitenden Ring, welcher an der Innenseite Stufen aufweist. Die Stufen verursachen eine Reflexion des Lichts so dass das in den Ring eingestrahlte Licht gleichmäßig im gesamten Ring verteilt wird. Die US 8,374,508 B2 zeigt eine optische Faser mit Kopplungsstrukturen, welche für eine Ein- oder Auskopplung von Licht in bzw. aus die bzw. der optischen Faser sorgt. Die US 4,711,516 zeigt zwei auf einer gemeinsamen Achse angeordnete Ringe transparenten Materials, welche jeweils Aussparungen für Lichtempfänger oder Emitter aufweisen.

### Überblick

In Anbetracht dessen besteht ein Bedarf an einer optischen Vorrichtung, welche eine Datenübertragung mit einer hohen Bandbreite zwischen zwei zueinander rotierenden Teilen ermöglicht.

Eine Idee der vorliegenden Offenbarung besteht darin, eine Grenzfläche eines einen Kreisbogen beschreibenden Lichtpfads zumindest teilweise so zu gestalten, dass ein Lichtstrahl, welcher eine tangentiale Komponente entlang des Kreisbogens aufweist, in den Lichtpfad eingekoppelt werden kann. Dies kann dadurch erreicht werden, dass zumindest erste Grenzflächen von Lichtpfadelementen des Lichtpfads so orientiert sind, dass ihre Orientierung, über die jeweilige erste Grenzfläche gemittelt, im Vergleich zu einer tangentialen Orientierung verkippt ist. Somit entsteht eine Vorzugsrichtung für Lichtstrahlen, deren tangentiale Komponente eine vorbestimmte Richtung aufweist. Durch eine Anordnung der Lichtpfadelemente entlang des Lichtpfads kann so eine vorbestimmte Laufrichtung für ein jeweiliges Lichtpfadsegment des Lichtpfads geschaffen werden. Durch die Ausgestaltung der ersten Grenzflächen wird somit Licht, welches den Lichtpfad entlang der vorbestimmten Laufrichtung durchläuft auf dem Lichtpfad gehalten, wohingegen eine Ausbreitung von Licht entgegen der vorbestimmten Laufrichtung unterdrückt wird. Ändert sich die tangentiale Position, an welcher Licht in den Lichtpfad eingekoppelt wird, stetig, kann aufgrund der vorbestimmten Laufrichtung des Lichtpfads erreicht werden, dass Licht in derselben zeitlichen Abfolge an einer bestimmten Position, beispielsweise einem Ende, des Lichtpfads eintrifft, in der es in den Lichtpfad eingekoppelt wurde. Dadurch werden hohe Datenraten ermöglicht. Zusätzlich gewährleistet die Ausgestaltung der ersten Grenzflächen eine sehr effiziente Einkopplung von Lichtstrahlen in den Lichtpfad, da ein den Lichtpfad in der vorbestimmten Laufrichtung durchlaufender Lichtstrahl aufgrund der Verkippung der ersten Grenzflächen bei einer Reflexion an einer der ersten Grenzflächen so reflektiert werden kann, dass ein Winkel zu der tangentialen Richtung verkleinert wird. Bei einigen Beispielen kann dadurch eine Totalreflexion ermöglicht werden. Bei weiteren Beispielen kann dadurch der Lichtpfad in radialer Richtung verkleinert werden, so dass beispielsweise ein im Inneren des Lichtpfads freier Platz vergrößert werden kann.

Beispiele der vorliegenden Offenbarung schaffen eine optische Vorrichtung, die einen Lichtpfad zum Leiten eines Lichtstrahls entlang eines Kreisbogens aufweist. Der Lichtpfad weist zumindest ein Lichtpfadsegment auf, das eine Anzahl tangential entlang des Lichtpfads angeordneter Lichtpfadelemente aufweist. Jedes der Lichtpfadelemente ist in einer radialen Richtung zumindest teilweise von einer ersten Grenzfläche begrenzt. Die ersten Grenzflächen eines jeweiligen Lichtpfadsegments sind jeweils ausgebildet, um zumindest Licht, welches von dem Lichtpfad mit einem Einfallswinkel größer als ein vorbestimmter Winkel auf die jeweilige erste Grenzfläche trifft, zu reflektieren, um einen sich in einer für das jeweilige Lichtpfadsegment vorbestimmten Laufrichtung entlang des Lichtpfads ausbreitenden Lichtstrahl auf dem Lichtpfad zu halten. Ein erstes tangentiales Ende der ersten Grenzflächen ist radial weiter vom Kreismittelpunkt des Kreisbogens beabstandet, als ein zweites tangentiales Ende.

Durch eine solche Anordnung der tangentialen Enden der ersten Grenzflächen wird erreicht, dass die Orientierung der ersten Grenzflächen im Vergleich zu einer Orientierung parallel zu der tangentialen Richtung verkippt ist. Dadurch kann bezüglich der tangentialen Richtung eine Vorzugsrichtung für die Reflexion von Lichtstrahlen an den ersten Grenzflächen entstehen. Durch die Vorzugsrichtung für die Reflexion kann die vorbestimmte Laufrichtung des jeweiligen Lichtpfadsegments erreicht werden, so dass Mehrfachausbreitung von Licht in verschiedene Richtungen unterdrückt werden kann.

Die vorgestellte Lösungsidee kann sich deutlich von der Patentanmeldung DE102017217110 A1 unterscheiden. Anders als DE 10 2007 041 927 A1 basiert die Idee auf Strahlenoptik. Im Gegensatz zu DE 28 46 526 A1, US 2004/0062344 A1, US 4109997 A jedoch sind Datenraten im Bereich von >10⁹ bit/s möglich. Dies kann durch eine geordnete Strahlführung in der Lichtleiterstruktur gelingen, um Mehrwegeausbreitung effektiv zu vermeiden. Der Ansatz der vorliegenden Offenbarung basiert auf klassischer Strahlenoptik. Im Gegensatz zu den im Stand der Technik bekannten Lösungen, bei welchem davon ausgegangen werden muss, dass die verwendeten Strukturen keine spezielle Form haben und deshalb die Strahlen mehr oder weniger chaotisch durch den Lichtleiter propagieren, können Beispiele der vorliegenden Offenbarung eine geordnete Strahlführung auf einem Lichtpfad ermöglichen. Ferner kann durch die Anordnung von Grenzflächen des Lichtpfads gemäß Beispielen der vorliegenden Offenbarung eine Mehrwegeausbreitung von Lichtstrahlen auf dem Lichtpfad unterdrückt werden. Dadurch können erhöhte Datenraten ermöglicht werden.

Bei Beispielen ist jede der ersten Grenzflächen eines jeweiligen Lichtpfadsegments so ausgebildet, dass für jeden Punkt der ersten Grenzflächen eine Oberflächennormale gegenüber einer Verbindungslinie zwischen dem jeweiligen Punkt der ersten Grenzflächen und dem Kreismittelpunkt des Kreisbogens innerhalb der Kreisebene des Kreisbogens in einer für das jeweilige Lichtpfadsegment vorbestimmten Rotationsrichtung rotiert ist. Im Vergleich zu einer Fläche, deren Oberflächennormale gegenüber der Verbindungslinie nicht rotiert ist, ist der Einfallswinkel eines Lichtstrahls, welcher eine tangentiale Komponente in Richtung der vorbestimmten Laufrichtung hat, in jedem Punkt der ersten Grenzflächen verringert. Somit ermöglicht diese Ausgestaltung der ersten Grenzflächen eine besonders starke Ausprägung der Vorzugsrichtung für die Ausbreitung des Lichts in dem Lichtpfadsegment. Bei Beispielen wird außerdem die Einkoppeleffizienz erhöht.

Bei Beispielen ist ein jeweiliger Schnitt der ersten Grenzflächen in der Kreisebene des Kreisbogens bezüglich des Kreismittelpunkts konvex oder plan. Eine konvexe Ausgestaltung ermöglicht es, einen Lichtstrahl besonders gut auf einem Kreisbogen förmigen Lichtpfad zu halten. Somit kann eine radiale Ausdehnung des Lichtpfads verringert werden. Alternativ kann eine Anzahl der Lichtpfadelemente geringgehalten werden, wodurch die optische Vorrichtung einfacher zu implementieren ist. Eine plane Ausgestaltung der Grenzflächen kann sehr kostengünstig realisiert werden, und kann beispielsweise in Kombination mit einer hohen Anzahl von Lichtpfadelementen und/oder einer größeren radialen Ausdehnung des Lichtpfads ein Leiten des Lichts auf dem Lichtpfad ermöglichen.

Bei Beispielen beschreibt ein Schnitt einer jeden der ersten Grenzflächen in der Kreisebene des Kreisbogens des Lichtpfads einen Kreisbogen, auf welchen sich als Grenzflächen-Kreisbogen bezogen wird. Eine Kreisbogen-förmige Ausgestaltung der ersten Grenzflächen ermöglicht es, Lichtstrahlen sehr präzise auf dem Kreisbogen förmigen Lichtpfad zu halten.

Bei Beispielen beinhaltet das zumindest eine Lichtpfadsegment zumindest ein erstes Lichtpfadsegment und ein zweites Lichtpfadsegment. Die für das erste Lichtpfadsegment und das zweite Lichtpfadsegment jeweils vorbestimmten Laufrichtungen sind gegensätzlich. Jedes der zwei Lichtpfadsegmente kann beispielsweise jeweils die Hälfte des Lichtpfads umfassen. Durch die Kombination zweier Lichtpfadsegmente mit gegensätzlichen vorbestimmten Laufrichtungen kann ein Laufzeitsprung vermieden werden. Ein Laufzeitsprung kann beispielweise auftreten, wenn eine Sendeeinheit, die ein optisches Signal, welches in Form eines Lichtstrahls in den Lichtpfad eingekoppelt werden soll, aussendet, an einer Position des Lichtpfads an welcher das optische Signal in Form des Eingekoppelten Lichtstrahls detektiert werden soll, vorbei rotiert. Besonders vorteilhafte wird die Kombination zweier Lichtpfadsegmente damit kombiniert, dass eine Sendeeinheit welche auf einer zu dem Lichtpfad konzentrischen Kreisbahn relativ zu dem Lichtpfad rotierber angeordnet ist, das optische Signal in Form zweier Licht strahlen, welche zueinander gegensätzliche tangentiale Komponenten aufweisen, kombiniert. Durch die Kombination zweier Lichtpfadsegmente mit gegensätzlichen vorbestimmten Laufrichtungen kann somit ermöglicht werden, dass sich die Laufzeit vom Einkoppeln eines Lichtstrahls zu einem Punkt, an welchem das eingekoppelte Licht detektiert werden soll, stetig mit der Position der Sendeeinheit verändert. Durch die Vermeidung des Laufzeitsprungs werden sehr hohe Datenraten ermöglicht.

Bei Beispielen weist die optische Vorrichtung ferner eine stationär zu dem Lichtpfad angeordnete Empfangseinrichtung auf. Die Empfangseinrichtung ist ausgebildet, um Licht, welches eines der zumindest einen Lichtpfadsegmente in der vorbestimmten Laufrichtung des jeweiligen Lichtpfadsegments durchläuft, oder durchlaufen hat, zu detektieren. Somit kann Licht, das in der vorbestimmten Laufrichtung in den gleicht Pfad eingekoppelt wird, detektiert werden. Da das zumindest eine Lichtpfadsegment eine Einopplung von Licht entlang seines vollständigen Umfangs ermöglichen kann, kann somit eine Detektion von Licht, welches an verschiedenen oder beliebigen tangentialen Positionen ausgesendet wurde detektiert werden. Damit kann eine Übertragung eines Signals zwischen zwei zueinander rotierenden Bauteilen zuverlässig ermöglicht, beispielsweise unabhängig von einem relativen Rotationswinkel zwischen den zwei Bauteilen.

Bei Beispielen begrenzen die ersten Grenzflächen den Lichtpfad in radialer Richtung nach außen, und sind als Spiegel für das Licht des Lichtpfads ausgebildet, um Licht, welches von dem Lichtpfad auf die jeweilige erste Grenzfläche trifft, zu reflektieren. Spiegel können einen hohen Reflexionsgrad ermöglichen. Die Anordnung der ersten Grenzflächen als äußere Grenzen kann somit weitgehend verhindern, dass Licht den Lichtpfad nach außen verlässt. Somit wird die optische Leistung im Inneren des Lichtpfads gehalten.

Bei Beispielen sind die ersten Grenzflächen entlang der axialen Richtung des Kreisbogens konvex bezüglich des Kreismittelpunkts des Kreisbogens ausgebildet. Die ersten Grenzflächen können somit fokussierend in Bezug auf die axiale Richtung wirken. Somit werden Lichtstrahlen, welche eine Richtungskomponente entlang einer axialen Richtung aufweisen bei einer Reflexion an einer der ersten Grenzflächen in Richtung der Kreisebene reflektiert, so dass Lichtstrahlen präzise auf dem Lichtpfad gehalten werden können.

Bei Beispielen sind die Lichtpfadelemente von einem oder mehreren Lichtleitern gebildet. Jedes der Lichtpfadelemente ist entlang einer radialen Richtung nach innen und nach außen zumindest teilweise von jeweils einer unterschiedlichen aus der ersten Grenzfläche und einer zweiten Grenzfläche begrenzt. Die zweiten Grenzflächen der Lichtpfadelemente sind jeweils ausgebildet, um Licht, welches von dem Lichtpfad mit einem Einfallswinkel großer als ein kritischer Winkel der jeweiligen zweiten Grenzfläche auf die jeweilige zweite Grenzfläche trifft, zu reflektieren, um einen sich in einer für das jeweilige Lichtpfadsegment vorbestimmten Laufrichtung entlang des Lichtpfads ausbreitenden Lichtstrahl auf dem Lichtpfad zu halten. Die Lichtpfadelemente sind keilförmig und weisen an einem ersten tangentialen Ende in radialer Richtung eine größere Ausdehnung auf, als an einem zweiten tangentialen Ende. Lichtleiter sind in der Lage, Lichtstrahlen besonders verlustarm zu leiten, auch auf einem gebogenen Lichtpfad, da bei einem Einfall eines Lichtstrahls auf eine Grenzfläche des Lichtleiters mit einem Einfallswinkel großer als der kritische Winkel Totalreflexion auftritt. Die Verwendung von Lichtleitern ist in Verbindung mit der Ausgestaltung der ersten Grenzflächen besonders vorteilhaft, da diese ermöglicht, dass ein Lichtstrahl, welcher von außerhalb des Lichtleiter, also von außerhalb des Lichtpfads, in den Lichtleiter gebrochen wird, an einer zu der Eintrittsfläche gegenüberliegenden Grenzfläche des Lichtleiters mittels Totalreflexion reflektiert zu werden. Die Eintrittsfläche kann beispielsweise die erste Grenzfläche oder eine der ersten Grenzfläche gegenüberliegenden Grenzfläche des Lichtleiters sein. Die Ausgestaltung der ersten Grenzflächen als Grenzflächen eines Lichtleiterelements ermöglicht also eine in Summe effiziente Einkopplung und Übertragung von Licht mittels des Lichtpfads.

Bei Beispielen begrenzen die ersten Grenzflächen die Lichtpfadsegmente in radialer Richtung nach außen, und die zweiten Grenzflächen die Lichtpfadsegmente in radialer Richtung nach innen. Die zweiten Grenzflächen sind entsprechend der ersten Grenzflächen ausgebildet, d.h. die zweiten Grenzflächen können die hierin beschriebenen Merkmale der ersten Grenzflächen, insbesondere deren Ausgestaltung und Form, aufweisen. Dass die zweiten Grenzflächen entsprechend der ersten Grenzflächen ausgebildet sind, soll nicht bedeuten, dass die ersten Grenzflächen notwendigerweise identisch zu den zweiten Grenzflächen sind, sondern dass die die ersten Grenzflächen kennzeichnenden Merkmale auch auf die zweiten Grenzflächen zutreffen. Das erste tangentiale Ende der ersten Grenzflächen eines jeweiligen Lichtpfadsegments ist dem zweiten tangentialen Ende der zweiten Grenzflächen des jeweiligen Lichtpfadsegments in radialer Richtung gegenüberliegend angeordnet. Dadurch, dass sowohl die ersten Grenzflächen als auch zweiten Grenzflächen gegenüber einer tangentialen Orientierung verkippt sind, kann eine besonders starke Keilform erreicht werden, das heißt der Winkel zwischen zwei gegenüberliegenden der ersten und zweiten Grenzflächen kann besonders groß sein. Somit kann die Vorzugsrichtung besonders stark ausgeprägt sein und ein Winkelbereich, in welchem eine Einkopplung von Licht in den Lichtpfad erreicht werden kann, besonders groß sein.

Bei Beispielen begrenzen die ersten Grenzflächen die Lichtpfadsegmente in radialer Richtung nach außen, und die zweiten Grenzflächen die Lichtpfadsegmente in radialer Richtung nach innen. Die zweiten Grenzflächen sind entsprechend der ersten Grenzflächen ausgebildet, wie oben beschrieben. Für die ersten Grenzflächen eines jeweiligen Lichtpfadsegments ist die Richtung, entlang derer man von dem ersten tangentialen Ende entlang der jeweiligen ersten Grenzfläche zu dem zweiten tangentialen Ende gelangt, der für das jeweilige Lichtpfadsegment vorbestimmten Laufrichtung entgegengesetzt. Für die zweiten Grenzflächen eines jeweiligen Lichtpfadsegments entspricht die Richtung, entlang derer man von dem ersten tangentialen Ende entlang der jeweiligen zweiten Grenzfläche zu dem zweiten tangentialen Ende gelangt, der für das jeweilige Lichtpfadsegment vorbestimmten Laufrichtung. Diese Ausgestaltung weist die Vorteile des vorhergehenden Beispiels auf, und ermöglicht zusätzlich eine flexiblere Implementierung bzw. Gestaltung der Lichtpfadsegmente.

Bei Beispielen sind die ersten und die zweiten Grenzflächen in tangentialer Richtung zum Lichtpfads einander verschoben angeordnet. Durch eine solche Anordnung kann die Einkoppeleffizienz für Licht, welches von außerhalb des Lichtpfads in den Lichtleiter eingekoppelt werden soll, gegenüber einer Ausgestaltung, bei der jeweils eine der ersten und der zweiten Grenzflächen einander gegenüberliegend angeordnet sind, verbessert werden.

Bei Beispielen bilden die zweiten Grenzflächen eines jeweiligen Lichtpfadsegments zusammen einen Kreisbogen um den Kreismittelpunkt des Lichtpfads. Bei dieser Ausgestaltung der Lichtpfadsegmente ist die Grenzfläche des Lichtpfadsegments, welche von den zweiten Grenzflächen gebildet wird besonders aufwandsarm herzustellen.

Bei Beispielen sind die die Lichtpfadelemente radial nach außen begrenzenden Grenzflächen entlang der axialen Richtung des Kreisbogens konvex bezüglich des Kreismittelpunkts des Kreisbogens ausgebildet. Ferner sind die die Lichtpfadelemente radial nach innen begrenzenden Grenzflächen entlang der axialen Richtung des Kreisbogens konkav bezüglich des Kreismittelpunkts des Kreisbogens ausgebildet. Die ersten und zweiten Grenzflächen können somit fokussierend in Bezug auf die axiale Richtung wirken. Somit werden Lichtstrahlen, welche eine Richtungskomponente entlang einer axialen Richtung aufweisen bei einer Reflexion an einer der ersten oder zweiten Grenzflächen in Richtung der Kreisebene reflektiert, so dass Lichtstrahlen präzise auf dem Lichtpfad gehalten werden können. Die Lichtpfadsegmente weisen somit eine hohe Toleranz gegenüber dem Einstrahlwinkel gegenüber der Kreisebene eines Lichtstrahls, welcher in den Lichtpfad eingekoppelt werden soll auf. Somit kann die Einstrahlwinkel Cents erhöht werden.

Bei Beispielen liegt ein Keilwinkel zwischen jeweils einer der ersten Grenzflächen und einer der zweiten Grenzflächen in einem Bereich zwischen 1° und 10° oder in einem Bereich zwischen 2° und 6°. Der Keilwinkel ist dabei die Summe eines ersten Winkels der jeweiligen ersten Grenzfläche und eines zweiten Winkels der jeweiligen zweiten Grenzfläche. Der erste Winkel ist der kleinste Winkel zwischen der Verbindungslinie zwischen dem ersten tangentialen Ende und dem zweiten tangentialen Ende der jeweiligen ersten Grenzfläche und der Tangente an den Kreisbogen des Lichtpfads in einem Punkt, der in tangentialer Richtung mittig zwischen dem ersten tangentialen Ende und dem zweiten tangentialen Ende der jeweiligen ersten Grenzfläche liegt. Der zweite Winkel ist der kleinste Winkel zwischen der Verbindungslinie zwischen dem ersten tangentialen Ende und dem zweiten tangentialen Ende der jeweiligen zweiten Grenzfläche und der Tangente an den Kreisbogen des Lichtpfads in einem Punkt, der in tangentialer Richtung mittig zwischen dem ersten tangentialen Ende und dem zweiten tangentialen Ende der jeweiligen zweiten Grenzfläche liegt. Liegt der Keilwinkel in diesem Bereich, kann Licht besonders effizient in den Lichtpfad eingekoppelt werden. Liegt der Keilwinkel in diesem Bereich, kann der Einstrahlwinkel so gewählt werden, dass an der Eintrittsgrenzfläche geringe Verluste auftreten und gleichzeitig eine Totalreflexion des in das Lichtleiterelement gebrochenen Lichtstrahls an der gegenüberliegenden Grenzfläche möglich ist. Verluste an der Eintritts Grenzfläche können beispielsweise durch Rückreflexion oder fresnelsche Verluste, auftreten, so dass ein Großteil der optischen Leistung an der Eintrittsgrenzfläche in den Lichtleiter gebrochen wird.

Bei Beispielen weist die optische Vorrichtung zumindest eine Sendeeinheit auf. Die zumindest eine Sendeeinheit und der Lichtpfad sind so angeordnet, dass die zumindest eine Sendeeinheit auf einer zu dem Lichtpfad konzentrischen Kreisbahn relativ zu dem Lichtpfad rotierbar ist. Die zumindest eine Sendeeinheit ist ausgebildet, um zumindest einen Lichtstrahl, welcher ein Signal signalisiert, in Richtung der Kreisbahn des Lichtpfads auszusenden. Durch die Kombination der Sendeeinheit mit dem Lichtpfad der optischen Vorrichtung kann eine unterbrechungsfreie Übertragung eines Signals zwischen zwei rotierenden Bauteilen ermöglicht werden.

Bei Beispielen weist die optische Vorrichtung ferner zumindest eine Sendeeinheit auf, wobei die zumindest eine Sendeeinheit und der Lichtpfad so angeordnet sind, dass die zumindest eine Sendeeinheit auf einer zu dem Lichtpfad konzentrischen Kreisbahn relativ zu dem Lichtpfad rotierbar ist. Dabei ist der Radius der konzentrischen Kreisbahn kleiner als der Radius des Kreisbogens des Lichtpfads. Die zumindest eine Sendeeinheit ist ausgebildet, um zumindest einen Lichtstrahl, welcher ein Signal signalisiert, in Richtung der Kreisbahn des Lichtpfads auszusenden. Dadurch, dass die konzentrische Kreisbahn kleiner als der Radius des Lichtbogens des Lichtpfads ist, ist diese Anordnung besonders gut geeignet um Licht in den Lichtpfad einzukoppeln, falls die zweiten Grenzflächen von Spiegeln gebildet sind.

Bei Beispielen weist die optische Vorrichtung ferner zumindest eine Sendeeinheit auf, wobei die zumindest eine Sendeeinheit und der Lichtpfad so angeordnet sind, dass die zumindest eine Sendeeinheit auf einer zu dem Lichtpfad konzentrischen Kreisbahn relativ zu dem Lichtpfad rotierbar ist. Der Radius der konzentrischen Kreisbahn kleiner oder größer als der Radius des Kreisbogens des Lichtpfads. Diese Sendeeinheit ist ausgebildet, um zumindest einen Lichtstrahl, welcher ein Signal signalisiert, in Richtung der Kreisbahn des Lichtpfads auszusenden. Dabei ist die Abstrahlrichtung des zumindest einen Lichtstrahls so gewählt, dass der zumindest eine Lichtstrahl bei einem auftreffen auf eine der ersten Grenzflächen oder der zweiten Grenzflächen eines der zumindest einen Lichtpfadsegmente durch Brechung in den Lichtpfad einkoppelt.

Bei Beispielen ist die Abstrahlrichtung des zumindest einen Lichtstrahls so gewählt, dass der Einfallswinkel des zumindest einen Lichtstrahls beim Auftreffen auf eine der ersten oder zweiten Grenzflächen weniger als 80° beträgt, oder weniger als 75° beträgt, oder in einem Bereich zwischen 60° und 80° liegt, oder in einem Bereich zwischen 65° und 75° liegt. In einem Bereich von weniger als 80° oder weniger als 75° tretenden besonders geringe fresnelsche Verluste auf. In einem Bereich von über 60° oder über 65° kann der eingekoppelte Lichtstrahl gegenüber einer gegenüberliegenden Grenzfläche einen Einfallswinkel aufweisen, welcher Totalreflexion ermöglicht. Somit kann besonders viel optische Leistung in den Lichtpfad eingekoppelt werden.

Bei Beispielen beinhaltet das zumindest eine Lichtpfadsegment ein erstes und ein zweites Lichtpfadsegment. Die vorbestimmte Laufrichtung des ersten Lichtpfadsegments ist der des zweiten Lichtpfadsegments entgegengesetzt. Ferner weist die optische Vorrichtung zumindest eine Sendeeinheit auf. Der Lichtpfad und die zumindest eine Sendeeinheit sind so angeordnet, dass die zumindest eine Sendeeinheit auf einer zu dem Lichtpfad konzentrischen Kreisbahn relativ zu dem Lichtpfad rotierbar ist. Die zumindest eine Sendeeinheit ist ausgebildet, um einen ersten Lichtstrahl und einen zweiten Lichtstrahl in Richtung der Kreisbahn des Lichtpfads auszusenden. Eine tangentiale Komponente des Richtungsvektors des ersten Lichtstrahls zeigt in die vorbestimmte Laufrichtung des ersten Lichtpfadsegments, und eine tangentiale Komponente des Richtungsvektors des zweiten Lichtstrahls zeigt in die vorbestimmte Laufrichtung des zweiten Lichtpfadsegments. Somit kann, je nachdem an welcher Position relativ zu dem Lichtpfad sich die Sendeeinheit befindet, entweder der erste Lichtstrahl in das erste Lichtpfadsegment eingekoppelt werden, oder der zweite Lichtstrahl in das zweite Lichtpfadsegment eingekoppelt werden. Somit ist eine unterbrechungsfreie Signalübertragung zwischen der Sendeeinheit und dem Lichtpfad möglich, unabhängig von deren relativen Rotationsposition zueinander.

Bei Beispielen umfasst der Lichtpfad einen n-ten Bruchteil eines ganzen Kreises, und die zumindest eine Sendeeinheit beinhaltet eine Anzahl von n Sendeeinheiten, welche gleichverteilt auf der konzentrischen Kreisbahn angeordnet sind. Somit kann der Lichtpfad sehr kompakt gestaltet werden, und gleichzeitig eine Signalübertragung entlang eines ganzen Kreises von 360° erreicht werden.

Beispiele der vorliegenden Offenbarung schaffen ein Verfahren zum übertragen eines Signals zwischen zwei zueinander rotierenden Einheiten unter Verwendung der optischen Vorrichtung gemäß den zuvor beschriebenen Beispielen. Das Verfahren beinhaltet ein Aussenden zumindest eines Lichtstrahls, welcher das Signal signalisiert. Ferner beinhaltet das Verfahren ein Einkoppeln zumindest eines des zumindest einen Lichtstrahls in eines der zumindest einen Lichtpfadsegmente, so dass der eingekoppelte Lichtstrahl sich in der vorbestimmten Laufrichtung des Lichtpfadsegments ausbreitet. Außerdem beinhaltet das Verfahren ein Detektieren des eingekoppelten Lichtstrahls, der sich in der vorbestimmten Laufrichtung ausgebreitet hat, mittels einer stationär zu dem Lichtpfad angeordneten Empfangseinrichtung.

### Kurzbeschreibung der Figuren

Beispiele der Offenbarung werden nachfolgend bezugnehmend auf die beigefügten Figuren beschrieben. Es zeigen:
- Fig. 1: eine Draufsicht eines idealen Lichtleiters mit seitlicher Lichteinstrahlung,
- Fig. 2: eine Schnittansicht eines idealen Lichtleiters mit seitlicher Lichteinstrahlung,
- Fig. 3: eine Draufsicht einer optischen Vorrichtung mit keilförmigen Lichtleiterelementen gemäß einem Beispiel der vorliegenden Offenbarung,
- Fig. 4: eine Draufsicht einer optischen Vorrichtung mit keilförmigen Lichtleiterelementen gemäß einem weiteren Beispiel der vorliegenden Offenbarung,
- Fig. 5: eine Schnittansicht einer optischen Vorrichtung mit keilförmigen Lichtleiterelementen gemäß einem Beispiel der vorliegenden Offenbarung,
- Fig. 6: eine Schnittansicht einer optischen Vorrichtung mit keilförmigen Lichtleiterelementen gemäß einem Beispiel der vorliegenden Offenbarung,
- Fig. 7: eine Draufsicht einer optischen Vorrichtung mit keilförmigen Lichtleiterelementen gemäß einem weiteren Beispiel der vorliegenden Offenbarung,
- Fig. 8: eine Draufsicht einer optischen Vorrichtung mit keilförmigen Lichtleiterelementen gemäß einem weiteren Beispiel der vorliegenden Offenbarung,
- Fig. 9: eine Draufsicht einer optischen Vorrichtung mit Spiegelelementen gemäß einem weiteren Beispiel der vorliegenden Offenbarung,
- Fig. 10: eine Schnittansicht einer optischen Vorrichtung mit Spiegelelementen gemäß einem Beispiel der vorliegenden Offenbarung,
- Fig. 11A-D: schematische Darstellungen von Empfangseinrichtungen gemäß Beispielen der vorliegenden Offenbarung,
- Fig. 12: eine schematische Darstellung einer Einkopplung eines Lichtstrahls in ein keilförmiges Lichtleiterelement gemäß einem Beispiel der vorliegenden Offenbarung,
- Fig. 13: eine schematische Darstellung keilförmiger Lichtpfadsegmente gemäß einem weiteren Beispiel der vorliegenden Offenbarung,
- Fig. 14: eine schematische Darstellung einer optischen Vorrichtung gemäß einem Beispiel der vorliegenden Offenbarung,
- Fig. 15: eine schematische Darstellung der Orientierung der ersten Grenzflächen gemäß einem Beispiel der vorliegenden Offenbarung,
- Fig. 16: eine schematische Darstellung von Verbindungsflächen zwischen ersten Grenzflächen gemäß einem Beispiel der vorliegenden Offenbarung,
- Fig. 17: ein Flussdiagramm eines Verfahrens zum Übertragen eines Signals gemäß einem Beispiel der vorliegenden Offenbarung,
- Fig. 18: eine schematische Darstellung der optischen Vorrichtung gemäß einem weiteren Beispiel der Offenbarung.

### Detaillierte Beschreibung

Im Folgenden werden Beispiele der vorliegenden Offenbarung detailliert und unter Verwendung der beigefügten Beschreibungen beschrieben. In der folgenden Beschreibung werden viele Details beschrieben, um eine gründlichere Erklärung von Beispielen der Offenbarung zu liefern. Es ist jedoch für Fachleute offensichtlich, dass andere Beispiele ohne diese spezifischen Details implementiert werden können. Merkmale der unterschiedlichen beschriebenen Beispiele können miteinander kombiniert werden, es sei denn, Merkmale einer entsprechenden Kombination schließen sich gegenseitig aus oder eine solche Kombination ist ausdrücklich ausgeschlossen.

Es sei darauf hingewiesen, dass gleiche oder ähnliche Elemente oder Elemente, die die gleiche Funktionalität aufweisen, mit gleichen oder ähnlichen Bezugszeichen versehen sein können oder gleich bezeichnet werden, wobei eine wiederholte Beschreibung von Elementen, die mit dem gleichen oder ähnlichen Bezugszeichen versehen sind oder gleich bezeichnet werden, typischerweise weggelassen wird. Beschreibungen von Elementen, die gleiche oder ähnliche Bezugszeichen aufweisen oder gleich bezeichnet werden, sind gegeneinander austauschbar.

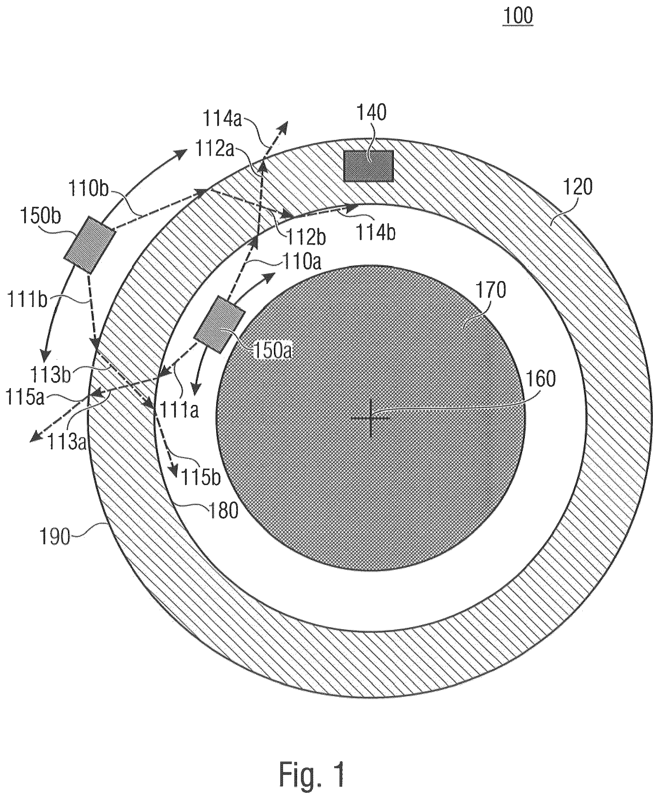

Fig. 1 zeigt eine schematische Darstellung in Draufsicht eines Beispiels eines optischen Datenlinks 100. Der optische Datenlink 100 besteht aus einer Sendeeinheit 150 und einer Empfangseinheit 140. Der Datenlink kann eine Kommunikationswellenlänge im infraroten, sichtbaren oder ultravioletten Spektralbereich nutzen. Dieser Spektralbereich wird im Folgenden vereinfacht als "Licht" bezeichnet. Beide befinden sich neben der Rotationsachse 160 und bewegen sich auf einer Kreisbahn um diese Rotationsachse 160. Eine dauerhafte Datenkommunikation ist ohne die vorgeschlagene Erfindung nicht möglich, da sich Sendeeinheit und Empfangseinheit nur in einer Position direkt gegenüberstehen.

Ausführungsbeispiele der Lösungsidee beschreiben eine Lichtleitstruktur 120, welche es ermöglicht die optische Verbindung zwischen Sender und Empfänger permanent zu ermöglichen. Dabei kann die Lichtleitstruktur 120 der Empfangseinheit 140 zugeordnet sein und kann das von der Sendeeinheit ausgesendete Licht, unabhängig von dessen Position auf der Umlaufbahn um die Rotationsachse, zur Empfangseinheit weiterleiten.

Ein Ausführungsbeispiel der erfinderischen Idee liegt dabei in der Lichtleitstruktur und ist von der Lichtleitung in einem mathematischen Torus abgeleitet. Licht welches sich tangential in einem optischen Medium, das wie ein Torus geformt ist, bewegt wird darin nahezu verlustfrei durch Totalreflexion geleitet. Diese Struktur kann also eine ideale Lichtleiterstruktur 120 darstellen. An einer Position dieses Torus kann dann eine Empfangseinheit 140 angeordnet sein, welche Licht und damit das optische Signal empfängt. Zum Beispiel wird dies über eine entsprechende Auskoppelstruktur gewährleistet. Um jedoch Daten zu übertragen muss das optische Signal verlässlich in jeder Position einer 360° Rotation in die Lichtleiterstruktur eingekoppelt werden.

Das in Fig. 1 gezeigte System weist eine Lichtleiterstruktur in Form eines Torus auf. Es werden zwei exemplarische Sender Positionen 150a, 150b gezeigt. Dabei wird einmal exemplarisch von Radial außerhalb 150b und einmal innerhalb 150a eingestrahlt. Die Sendestrahlen 110a, 110b, 111a, 111b treffen dabei unter einem sehr großen Winkel auf die Lichtleiterstruktur 120 auf. Die Strahlen 112a, 112b, 113a, 113b werden dann in den Torus hineingebrochen, so dass Sie unter einem wesentlich spitzeren Winkel auf die jeweils gegenüberliegende zweite Grenzfläche treffen. Die beiden konzentrischen Grenzflächen 180, 190 wirken, anders als in der schematischen Zeichnung, auf das einfallende Licht wie eine Planparallele Platte, da die Radien in einem Realen System deutlich größer und die Dicken eines solchen Torus zum Radius deutlich kleiner sind. Das bedeutet, das einfallende Licht verlässt den Torus unter demselben Winkel unter welchem es auf den Torus eingefallen ist. Es kann also kein Licht in den Lichtleiter eingekoppelt werden, da aufgrund des spitzen Winkels keine Totalreflexion stattfindet. Das Licht verlässt die Ringstruktur wieder.

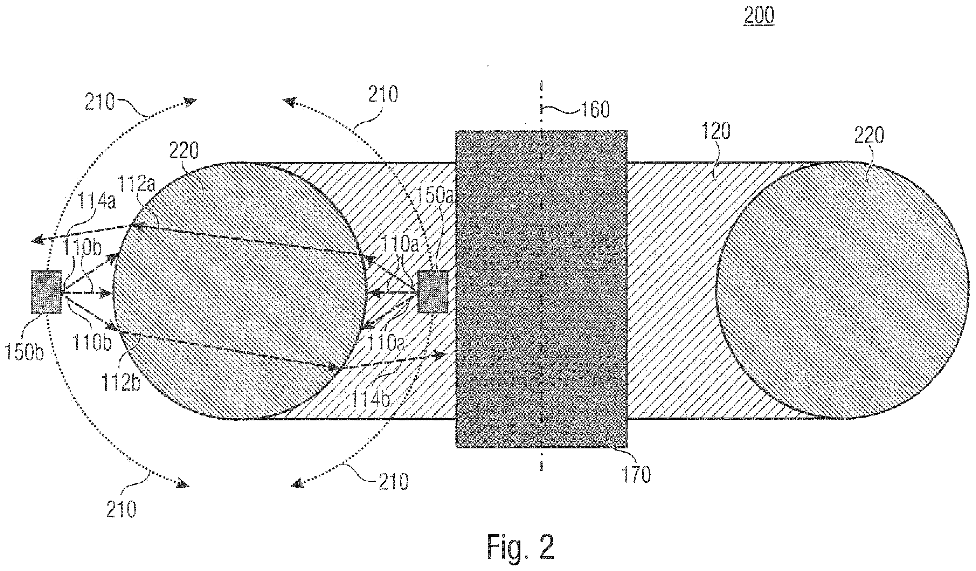

Fig. 2 zeigt einen Querschnitt entlang einer radialen Richtung des in Fig. 1 gezeigten optischen Datenlinks. Wie in Fig. 2 verdeutlicht, ist auch eine zusätzliche schräge Einstrahlung bezüglich des Querschnittes des Torus nicht ausreichend um das Licht, basierend auf Totalreflexion, einzukoppeln. Eingangsstrahlen 110a, 110b werden in den Torus hineingebrochen. Dargestellt durch die Querschnittsfläche 220. Die Eingekoppelten strahlen 112a, 112b treffen auf die jeweils gegenüberliegende Grenzfläche 180, 190 und verlassen den Lichtleiter 120 wieder. Dabei können Transmitter 150a, 150b 360° um den Querschnitt angeordnet werden.

Beispiele der vorliegenden Offenbarung sehen vor, die Lichtleiterstruktur dahingehend anzupassen, dass eine seitliche Einkopplung möglich ist. Bei weiteren Beispiele kann der Kerngedanke auch ohne Lichtleiter umgesetzt werden, beispielsweise mit Spiegelelementen.

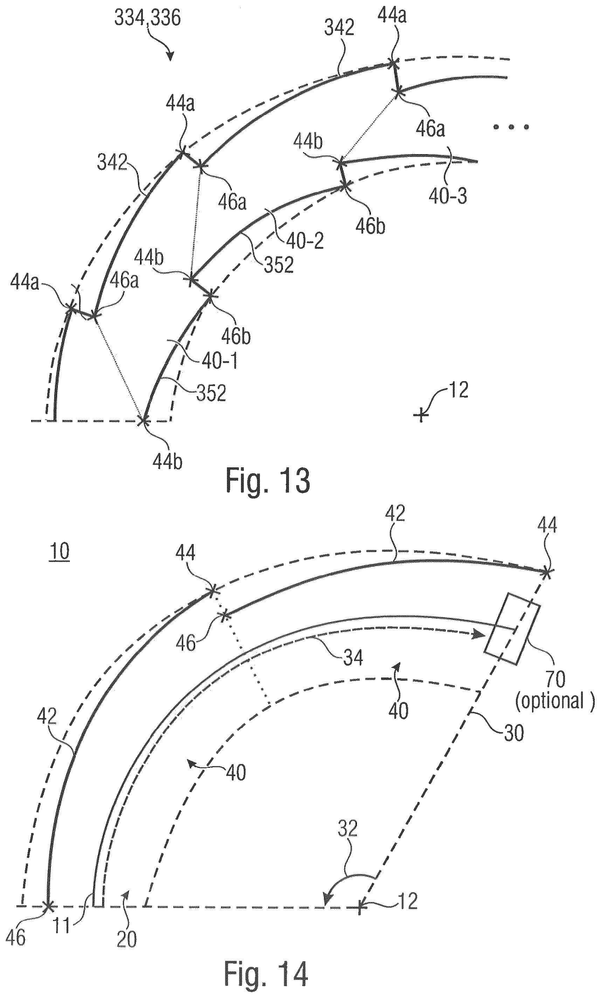

Fig. 14 zeigt eine schematische Darstellung einer optischen Vorrichtung 10 gemäß einem Beispiel der vorliegenden Offenbarung. Die optische Vorrichtung 10 weist einen Lichtpfad 20 zum Leiten eines Lichtstrahls entlang eines Kreisbogens 11 auf. Der Lichtpfad 20 weist zumindest ein Lichtpfadsegment 30 auf, welches eine Anzahl tangential entlang des Lichtpfads 20 angeordnete Lichtpfadelemente 40 aufweist. Eine radiale Richtung ist eine Richtung in der Kreisebene des Kreisbogens 11, welche durch den Kreismittelpunkt 12 des Kreisbogens 11 verläuft, wohingegen eine tangentiale Richtung eine Richtung senkrecht zu einer radialen Richtung bezeichnet. Jedes der Lichtpfadelemente 40 wird in einer radialen Richtung zumindest teilweise von einer ersten Grenzfläche 42 begrenzt. Die ersten Grenzflächen 42 eines jeweiligen Lichtpfadsegments 40 sind jeweils ausgebildet, um zumindest Licht, welches von dem Lichtpfad 20 mit einem Einfallswinkel größer als ein vorbestimmter Winkel auf die jeweilige erste Grenzfläche trifft, zu reflektieren, um einen sich in einer für das jeweilige Lichtpfadsegment vorbestimmten Laufrichtung entlang des Lichtpfads ausbreitenden Lichtstrahl auf dem Lichtpfad zu halten. Ein erstes tangentiales Ende 44 der ersten Grenzfläche 42 ist radial weiter vom Kreismittelpunkt 12 des Kreisbogens 11 beabstandet, als ein zweites tangentiales Ende 46 der ersten Grenzfläche 42. Eine tangentiale Richtung kann auch als azimutale Richtung bezeichnet werden. Unter einem tangentialen Ende kann ein Ende in Bezug auf eine tangentiale Richtung verstanden werden. Dabei bezeichnet das erste tangentiale Ende das Ende in einer ersten tangentialen Richtung, und das zweite tangentiale Ende das Ende in der der ersten tangentialen Richtung entgegengesetzten zweiten tangentialen Richtung.

Die ersten Grenzflächen 42 können als Grenzflächen zwischen verschiedenen Materialien verstanden werden, von welchen eines beispielsweise Luft sein kann. Dabei kann bei Beispielen der Lichtpfad 20 in Luft verlaufen, und die ersten Grenzflächen 42 Grenzflächen zu einem optisch dichteren Material, beispielsweise einem Metall, darstellen, so dass Licht, welches von dem Lichtpfad auf die ersten Grenzflächen trifft reflektiert wird. Bei weiteren Beispielen kann der Lichtpfad 20 zumindest teilweise von einem für das Licht des Lichtstrahls transparenten Festkörper gebildet werden, beispielsweise einem Lichtleiter, und die ersten Grenzflächen 42 Grenzflächen zu einem optisch weniger dichten Material darstellen, beispielsweise Luft, so dass Licht, welches von dem Lichtpfad 20 mit einem Einfallswinkel größer als der kritische Winkel der ersten Grenzflächen 42 auf eine der ersten Grenzflächen 42 trifft mittels Totalreflexion reflektiert wird. Der kritische Winkel ist dabei durch die optische Dichte oder den Brechungsindex der zwei Materialien, welche die ersten Grenzflächen 42 bilden, definiert. Somit kann sich der vorbestimmte Winkel auf den kritischen Winkel der jeweiligen ersten Grenzfläche 42 beziehen.

Sofern auf einen Einfallswinkel Bezug genommen wird, ist in der Regel der Winkel zwischen dem einfallenden Lichtstrahl und dem Einfallslot, d.h. der Normalen auf die Grenzfläche im Einfallspunkt, gemeint.

Bei Beispielen der optischen Vorrichtung 10 kann der Lichtpfad 20 also durch eine Lichtleiterstruktur verlaufen, dessen Grenzflächen die ersten und zweiten Grenzflächen des Lichtpfads beinhalten. Beispiele der optischen Vorrichtungen 10 können also ähnlich der in den Fig. 1 und 2 gezeigten optischen Vorrichtung 100, 200 sein, wobei die Lichtleiterstruktur 120 erfindungsgemäß wie in Hinblick auf Fig. 14 implementiert ist.

Bei dem in Fig. 14 gezeigten Beispiel umfasst der Kreisbogen 11, den der Lichtpfad 20 beschreibt, einen Kreisbogenwinkel 32 von 120°. Bei weiteren Beispielen umfasst der Lichtpfad 20 einen kleineren oder größeren Winkelbereich, z. B. einen vollständigen Kreis.

Ferner beinhaltet der Lichtpfad 20 bei dem in Fig. 14 gezeigten Beispiel zumindest ein Lichtpfadsegment 30. Für die ersten Grenzflächen 42 eines jeweiligen Lichtpfadsegments 30 kann eine Richtung entlang des Lichtpfads 20, entlang derer man von dem ersten tangentialen Ende 44 entlang der jeweiligen ersten Grenzfläche 42 zu dem zweiten tangentialen Ende 46 gelangt, einheitlich sein. In anderen Worten, die ersten Grenzflächen 42 eines jeweiligen Lichtpfadsegments 30 können in Bezug auf die tangentialen Richtungen an den Positionen der jeweiligen ersten Grenzflächen 42 in die gleiche Richtung verkippt oder geneigt sein. Somit kann für Licht innerhalb eines jeweiligen Lichtpfadsegments 30 die vorbestimmte Laufrichtung des jeweiligen Lichtpfadsegments 30 erreicht werden.

Dadurch, dass das erste tangentiale Ende 44 radial weiter vom Kreismittelpunkt 12 beabstandet ist als das zweite tangentialen Ende 46, kann eine gemittelte Ausrichtung der ersten Grenzfläche 42 gegenüber der Tangente an den Kreisbogen 11 an der Position (beispielsweise ein Mittelpunkt in tangentialer Richtung) der ersten Grenzfläche 42 rotiert sein. Somit wird ein Lichtstrahl, welcher auf die erste Grenzfläche 42 trifft, im Vergleich mit einer Grenzfläche, deren mittlere Ausrichtung gegenüber der Tangente nicht rotiert ist, abhängig von der Richtung der tangentialen Komponente des Lichtstrahls, entweder mehr oder weniger stark in die tangentiale Richtung reflektiert. Somit entsteht abhängig von der Orientierung der ersten Grenzflächen 42 eine Vorzugsrichtung, die vorbestimmte Laufrichtung 34, für die Ausbreitung eines Lichtstrahls entlang des Lichtpfads innerhalb eines jeweiligen Lichtpfadsegments 30. Somit wird Licht, welches sich auf dem Lichtpfad 20 in der vorbestimmten Laufrichtung 34 bewegt, bevorzugt auf dem Lichtpfad 20 gehalten. Im Gegensatz dazu, kann Licht, welches sich auf dem Lichtpfad 20 entgegen der vorbestimmten Laufrichtung bewegt in seiner Ausbreitung auf dem Lichtpfad 20 unterdrückt werden, beispielsweise indem es aus dem Lichtpfad 20 gelenkt wird. Dadurch, dass das jeweilige Lichtpfadsegment 30 eine vorbestimmte Laufrichtung 34 aufweist, und somit ein Auftreten unterschiedlicher Laufrichtungen unterdrückt wird, kann vermieden werden, dass ein optisches Signal, welches in Form eines Lichtstrahls in den Lichtpfad 20 eingekoppelt wird, an einer Position, an welcher das optische Signal ausgelesen werden soll, zu mehreren verschiedenen Zeiten auftritt.

Ferner kann die Orientierung der ersten Grenzflächen 42 eine Einkopplung eines Lichtstrahls von außerhalb des Lichtpfads 20 begünstigen oder ermöglichen, beispielsweise dadurch, dass durch die Orientierung der ersten Grenzflächen eine Totalreflexion eines Lichtstrahls, welcher von außerhalb des Lichtpfads 20 in den Lichtpfad 20 eingekoppelt wurde ermöglicht wird. Somit kann ein Lichtstrahl, welcher von außerhalb des Lichtpfads 20 in das Lichtpfadsegment 30 eingekoppelt wird, bis zu einem tangentialen Ende des Lichtpfadsegments 30 propagieren. Das tangentiale Ende des Lichtpfadsegments 30 kann das tangentiale Ende, zu welchem die vorbestimmte Laufrichtung 34 des Lichtpfadsegments 30 zeigt, bezeichnen.

Die Anzahl der Lichtpfadelemente 42 des Lichtpfadsegments 30 kann von der Länge des Kreisbogens 11, sowie einer radialen Abmessung des Lichtpfads abhängen. Ein in radialer Richtung von dem Lichtpfad benötigter Platz kann bei Beispielen mit zunehmender Anzahl der Lichtpfadelemente abnehmen. Bei Beispielen liegt der Radius des Kreisbogens 11 in der Größenordnung von cm oder m. Es sind aber auch kleinere oder größere Radien möglich. Für einen Radius ~ m kann der Lichtpfad zum Beispiel eine radiale Abmessung - cm haben. Obwohl das in Fig. 14 gezeigte Lichtpfadsegment 30 zur Anschaulichkeit zwei Lichtpfadelemente 42 aufweist, kann die Anzahl der Lichtpfadelemente 42 in der Regel sehr viel größer sein.

Bei Beispielen beträgt die radiale Länge der Lichtpfadsegmente 42 zwischen 1 % und 20 % des Radius des Kreisbogens 11. Dementsprechend kann die Anzahl der Lichtpfadsegmente 42 des Lichtpfads 20 in Abhängigkeit von dem Kreisbogenwinkel 32 des Lichtpfads 20 zwischen 2 und 50 Lichtpfadsegmente je 90° des Kreisbogenwinkels 32 betragen.

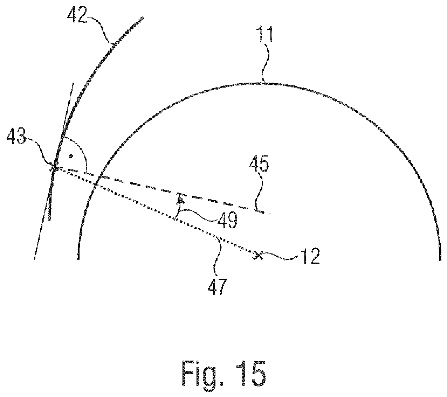

Fig. 15 zeigt ein Beispiel einer möglichen Ausbildung der ersten Grenzflächen 42. Bei diesem Beispiel ist jede der ersten Grenzflächen 42 eines jeweiligen Lichtpfadsegments 30 so ausgebildet, dass für jeden Punkt 43 der ersten Grenzflächen 42 eine Oberflächennormale 45 gegenüber einer Verbindungslinie 47 zwischen dem jeweiligen Punkt 43 der ersten Grenzfläche 42 und dem Kreismittelpunkt 12 des Kreisbogens 11 innerhalb der Kreisebene des Kreisbogens 11 in einer für das jeweilige Lichtpfadsegment 30 vorbestimmten Rotationsrichtung 49 rotiert ist. Als Rotationsrichtung 49 kann die Richtung der kleinstmöglichen Rotation, welche nötig ist um von der Verbindungslinie 47 zu der Oberflächennormalen 45 zu gelangen, bezeichnet werden.

Eine solche Formung der ersten Grenzflächen 42 hat zur Folge, dass bei einer Reflexion eines Lichtstrahls an einer der ersten Grenzflächen 42 der kleinste Winkel zwischen dem Lichtstrahl und einer Tangente an den Kreisbogen 11 des Lichtpfads 20 in der tangentialen Position der Reflexion kleiner wird. Somit kann beispielsweise für Lichtstrahlen mit Tangentialkomponente in der vorbestimmten Laufrichtung ein Einfallswinkel eines Auftreffens auf eine weitere Grenzfläche des Lichtpfadsegments 30 verkleinert werden.

Bei Beispielen der in Fig. 14 beschriebenen optischen Vorrichtung ist ein jeweiliger Schnitt der ersten Grenzflächen 42 in der Kreisebene des Kreisbogens 11 bezüglich des Kreismittelpunkts 12 konvex oder plan. Dies kann eine Ausführungsform der im Hinblick auf Fig. 15 beschriebenen ersten Grenzflächen 42 sein. Beispielsweise kann der Schnitt der ersten Grenzflächen in der Kreisebene des Kreisbogens 11 einen Kreisbogen, welche als Grenzflächen-Kreisbogen bezeichnet werden kann, beschreiben.

Jeweils zwei der ersten Grenzflächen 42, welche entlang der tangentialen Richtung einander nachfolgend angeordnet sind, können durch eine Verbindungsfläche verbunden sein. Somit kann beispielsweise abwechselnd jeweils eine der ersten Grenzflächen und eine Verbindungsfläche tangential entlang des Lichtpfads nebeneinander angeordnet sein.

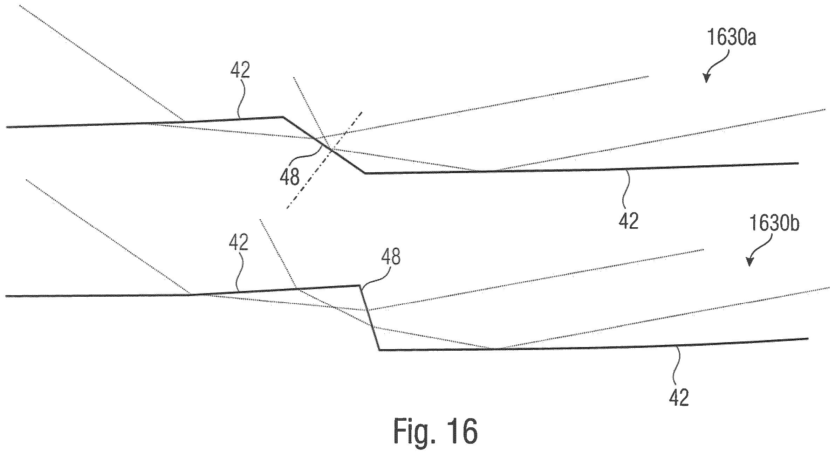

Fig. 16 zeigt Verbindungsflächen 48 gemäß Beispielen der vorliegenden Offenbarung. Es sind zwei Beispiele für Ausschnitte einer Grenzfläche 1630a und 1630b eines Lichtpfadsegments 30 gezeigt. Jeweils zwei erste Grenzflächen 42 können demnach durch eine Verbindungsfläche 48 verbunden sein. Ein Winkel zwischen den ersten Grenzflächen 42 und der Verbindungsfläche 48 am jeweiligen Verbindungspunkt kann flach, rechtwinklig oder spitz ausgestaltet sein.

Die Verbindungsfläche 48 kann in Bezug auf eine Spiegelung an einer zu der Kreisebene senkrechten Fläche durch den Kreismittelpunkt 12 und den Verbindungspunkt der Verbindungsfläche 48 mit der ihr angrenzenden ersten Grenzfläche 42 asymmetrisch zu der ihr angrenzenden ersten Grenzfläche 42 ausgebildet sein. Somit wird eine Vorzugsrichtung für Licht entlang der vorbestimmten Laufrichtung 34 erreicht.

Verbindungsflächen 48 können zusammen mit den ersten Grenzflächen 42 das Lichtpfadsegment 30 in einer radialen Richtung zumindest teilweise begrenzen, und somit gemeinsam eine Grenzfläche des Lichtpfadsegments 30 bilden. Bei Beispielen ist das Verhältnis, in welchem die Verbindungsfläche 48 und die ersten Grenzflächen 42 zu der Grenzfläche des Lichtpfadsegments, welche von diesen gebildet wird, beitragen größer als 1:5 oder größer als 1:10 oder größer als 1:20 (Beitrag der Verbindungsfläche 48 : Beitrag der ersten Grenzflächen 42).

Bei Beispielen der in Fig. 14 beschriebenen optischen Vorrichtung 10 weist die optische Vorrichtung 10 ferner eine stationär zu dem Lichtpfad 20 angeordnete Empfangseinrichtung 70 auf. Die Empfangseinrichtung 70 ist ausgebildet, um Licht, welches eines der zumindest einen Lichtpfadsegmente 30 in der vorbestimmten Laufrichtung 34 des jeweiligen Lichtpfadsegments 30 durchläuft, zu detektieren. Die Empfangseinrichtung 70 kann ausgelegt sein, um Licht, welches die Position der Empfangseinrichtung 70 über den Lichtpfad 20 erreicht, aus dem Lichtpfad 20 zu detektieren oder auszukoppeln um es zu detektieren. Dazu kann die Empfangseinrichtung 70 an dem tangentialen Ende des zumindest einen Lichtpfadsegments 30 angeordnet sein. Zum Beispiel kann die Empfangseinrichtung 70 infolge einer Detektion des Lichts ein Signal bereitstellen.

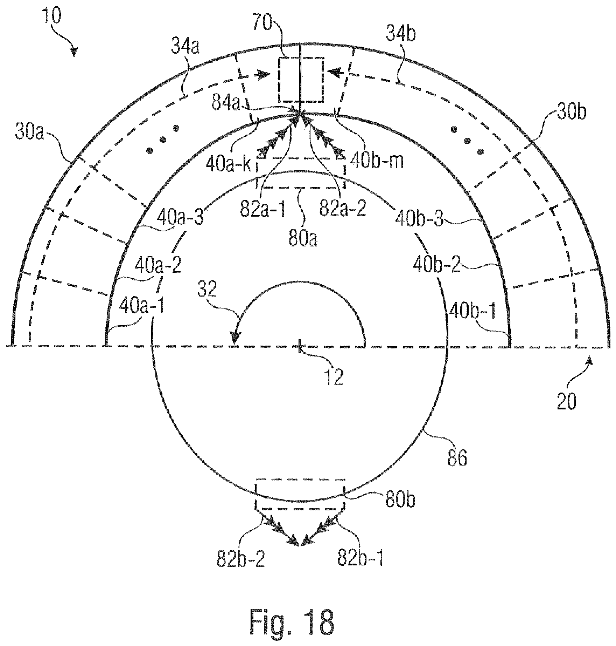

Fig. 18 zeigt eine schematische Darstellung der optischen Vorrichtung 10 gemäß einem weiteren Beispiel. Bei dem in Fig. 18 gezeigten Beispiel beinhaltet die optische Vorrichtung 10 ein erstes Lichtpfadsegment 30a und ein zweites Lichtpfadsegment 30b. Das erste und das zweite Lichtpfadsegment 30a und 30b sind jeweils ein Repräsentant des zumindest einen Lichtpfadsegments 30. Das erste Lichtpfadsegment 30a hat eine vorbestimmte Laufrichtung 34a. Das zweite Lichtpfadsegment 30b hat eine vorbestimmte Laufrichtung 34b. Die vorbestimmte Laufrichtung 34a und die vorbestimmte Laufrichtung 34b sind Beispiele der vorbestimmten Laufrichtung 34. Die vorbestimmten Laufrichtungen 34a, 34b des ersten und des zweiten Lichtpfadsegments 30a, 30b sind gegensätzlich.

Die Beschreibung des Lichtpfadsegments 30 kann sowohl auf das erste Lichtpfadsegment 30a als auch auf das zweite Lichtpfadsegment 30b zutreffen.

Das erste Lichtpfadsegment 30a beinhaltet eine Anzahl k von Lichtpfadelementen 40a-1, 40a-2, 40a-3, ..., 40a-k. Das zweite Lichtpfadsegment 30b beinhaltet eine Anzahl m von Lichtpfadelementen 40b-1, 40b-2, 40b-3, ..., 40b-m. Die Anzahl k und die Anzahl m können identisch sein. Das erste Lichtpfadsegment 30a und das zweite Lichtpfadsegment 30b können jeweils einzeln ein Beispiel für das Lichtpfadsegment 30 darstellen oder diesem entsprechen.

Das erste Lichtpfadsegment und das zweite Lichtpfadsegment können tangential entlang des Lichtpfads angeordnet sein, und können aneinander angrenzend angeordnet sein. Das zweite Lichtpfadsegment kann so angeordnet sein, dass sein tangentiales Ende neben dem tangentialen Ende des ersten Lichtpfadsegments angeordnet ist.

Die Empfangseinrichtung 70 kann an dem tangentialen Ende beider der ersten und zweiten Lichtpfadsegmente angeordnet sein. D.h., das tangentiale Ende des ersten Lichtpfadsegments kann angrenzend an das tangentiale Ende des zweiten Lichtpfadsegments angeordnet sein. Alternativ kann die Empfangseinrichtung 70 zwischen den tangentialen Enden des ersten und des zweiten Lichtpfadsegments angeordnet sein.

Beinhaltet der Lichtpfad ein einzelnes Lichtpfadsegment, kann es beim Vorbeirotieren eines Senders an der Empfangseinrichtung 70 zu einem Laufzeitsprung kommen, weil das Licht wenn es an einem Ende des Lichtpfads eingekoppelt wird, aufgrund der vorbestimmten Laufrichtung, das komplette Laufzeitsegment, beispielsweise eine komplette Runde im Lichtleiter, zurücklegen muss, während es zuvor an dem anderen Ende des Lichtpfads nahe der Empfangseinrichtung eingekoppelt wurde, und somit nahezu direkt eingestrahlt hat. Da hingegen kann mit zwei Lichtpfadelementen mit gegensätzlicher vorbestimmter Laufrichtung eine höhere Datenrate erreicht werden, da sich beispielsweise die Laufzeit von einem Sender zu der Empfangseinrichtung bei einer Rotation stetig ändert.

In Fig. 18 ist ferner eine erste Sendeeinheit 80a und eine zweite Sendeeinheit 80b gezeigt, welche Teil der optischen Vorrichtung 10 sein können oder im Betrieb der optischen Vorrichtung 10 neben dieser angeordnet sein können. Die Sendeeinheiten 80a, 80b sind auf einer zu dem Lichtpfad 20 konzentrischen Kreisbahn 86, relativ zu dem Lichtpfad 20 rotierbar angeordnet. Bei dem in Fig. 18 gezeigten Beispiel senden die Sendeeinheiten 80 a, 80 b jeweils einen ersten Lichtstrahl 82a-1, 82b-1 aus, welcher eine tangentiale Komponente entlang der Laufrichtung 34a des ersten Lichtpfadsegments 30a hat, und jeweils einen zweiten Lichtstrahl 82a-2, 82b-2, welcher eine tangentiale Komponente entlang der Laufrichtung 34b des zweiten Lichtpfadsegments 30b hat. Die Lichtstrahlen der 82a-1, 82a-2 ersten Sendeeinheit sind so ausgerichtet, dass sie an einem Punkt 84a, welcher von der Rotationsposition der Sendeeinheit 82a bezüglich des Lichtpfads 20 abhängt, auf den Lichtpfad 20 treffen. Je nachdem ob die Lichtstrahlen auf das erste Lichtpfadsegment oder auf das zweite Lichtpfadsegment treffen, koppelt zumindest einer der Lichtstrahlen in das jeweilige Lichtpfadsegment ein.

Bei dem in Fig. 18 gezeigten Beispiel umfasst der Lichtpfad 20 einen Winkel Kreisbogen 32 von 180°, wobei jedes der Lichtpfad Segmenten 30a, 30b die Hälfte des Lichtpfads 20 umfasst. Durch die Anordnung der Sendeeinheiten 80a, 80b auf der konzentrischen Kreisbahn gegenüberliegend voneinander ist gewährleistet, dass für jeden Rotationswinkel zwischen den Sendeeinheiten 80a, 80b und dem Lichtpfad 20 zumindest eine der Sendeeinheiten 80a, 80b so positioniert ist, dass zumindest einer der Lichtstrahlen der zumindest einen Sendeeinheit in den Lichtpfad 20 einkoppeln kann. Um dies zu erreichen, kann die Anzahl der Sendeeinheiten zumindest so groß wie der von dem Lichtpfad 20 umfasste Bruchteil eines ganzen Kreises gewählt sein. Dadurch kann eine unterbrechungsfreie Signalübertragung zwischen den Sendeeinheiten und der Empfangseinrichtung 70 für alle Rotationswinkel zwischen den Sendeeinheiten und dem Lichtpfad 20 bzw. zu der Empfangseinrichtung 70 gewährleistet sein.

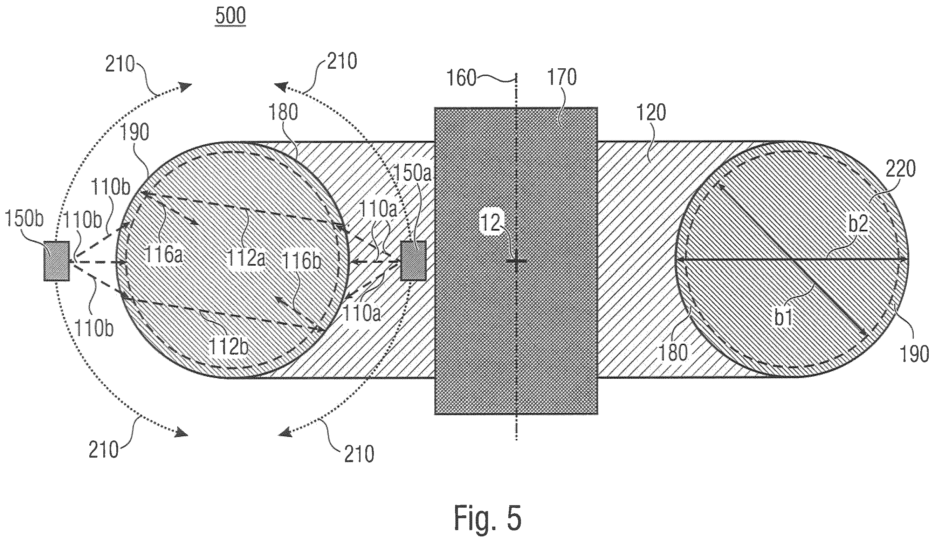

Bei Beispielen weist die optische Vorrichtung 10 also zumindest eine Sendeeinheit 80a, 80b auf, wobei die zumindest eine Sendeeinheit und der Lichtpfad 20 so angeordnet sind, dass die zumindest eine Sendeeinheit auf einer zu dem Lichtpfad konzentrischen Kreisbahn relativ zu dem Lichtpfad rotierbar ist. Die zumindest eine Sendeeinheit ist ausgebildet, um zumindest einen Lichtstrahl 82a-1, 82a-2, 82b-1, 82b-2, welcher ein Signal signalisiert, in Richtung der Kreisbahn 11 des Lichtpfads 20 auszusenden, d.h. beispielsweise, die Kreisbahn 11 auf welcher der Lichtpfad relativ zu der zumindest einen Sendeeinheit rotierbar angeordnet ist. Der Radius der konzentrischen Kreisbahn kann größer oder kleiner als der Radius des Kreisbogens 11 des Lichtpfads 20 sein. Der Lichtstrahl ist so ausgerichtet, dass das Licht des Lichtstrahls in den Lichtpfad einkoppeln kann, also den Lichtpfad beleuchtet. Eine Abstrahlrichtung relativ zu der Sendeeinheit kann dabei fest sein. Durch Rotieren der Sendeeinheit relativ zu dem Lichtpfad kann der Lichtstrahl an verschiedenen oder beliebigen tangentialen Positionen in den Lichtpfad eingekoppelt werden. Zum Beispiel kann die Sendeeinheit in radialer Richtung neben dem Lichtpfad angeordnet sein. Bei Beispielen, wie in Bezug auf Fig. 5 näher erläutert, kann die Sendeeinheit an einer beliebigen Position um den Querschnitt des Lichtpfads angeordnet sein. Der Querschnitt ist dabei ein Schnitt entlang einer zu der Kreisebene senkrechten Ebene. Ein oder mehrere oder alle Sendeeinheiten der zumindest einen Sendeeinheit können relativ zueinander fest angeordnet sein.

Bei Beispielen umfasst der Lichtpfad einen n-ten Bruchteil eines ganzen Kreises, und die zumindest eine Sendeeinheit beinhaltet eine Anzahl von n Sendeeinheit, welche gleichverteilt auf der konzentrischen Kreisbahn angeordnet sind, d.h. die Sendeeinheiten sind um Winkel von 360°/n voneinander beabstandet.

Die Anzahl der Lichtstrahlen, welche von jeder der Sendeeinheiten 80a, 80b ausgesendet werden, kann von der Anzahl der Lichtpfadsegmente 40, 40a, 40b des Lichtpfads abhängig sein. Eine tangentiale Komponente der von den Sendeeinheiten ausgesendeten Lichtstrahlen kann an die vorbestimmte Laufrichtung der Lichtpfade angepasst sein. Somit kann für einen Lichtpfad mit einem einzelnen Lichtpfadsegment, wie beispielsweise in Fig. 14 gezeigt, jede der Sendeeinheiten einen Lichtstrahl aussenden, während es für einen Lichtpfad mit zwei Lichtpfadsegmente mit gegensätzlichen vorbestimmten Laufrichtungen zweckmäßig sein kann, dass jede der Sendeeinheiten zwei Lichtstrahlen mit gegensätzlichen tangentialen Komponenten aussendet.

Bei Beispielen, bei denen das zumindest eine Lichtpfadsegment ein erstes und ein zweites Lichtpfadsegment 34a, 34b beinhaltet, und die optische Vorrichtung 10 die zumindest eine Sendevorrichtung 80a, 80b aufweist, kann die die zumindest eine Sendeeinheit ausgebildet sein, um einen ersten Lichtstrahl 82a-1, 82b-1 und einen zweiten Lichtstrahl 82a-2, 82b-2, in Richtung der Kreisbahn des Lichtpfads auszusenden. Eine tangentiale Komponente des Richtungsvektors des ersten Lichtstrahls 82a-1, 82b-1 zeigt in die vorbestimmte Laufrichtung 34a des ersten Lichtpfadsegments 30a, und eine tangentiale Komponente des Richtungsvektors des zweiten Lichtstrahls 82a-2, 82b-2 zeigt in die vorbestimmte Laufrichtung 34b des zweiten Lichtpfadsegments 30b. Der erste Lichtstrahl und der zweite Lichtstrahl können das identische Signal zeitgleich transportieren. Die zwei Lichtstrahlen können so ausgerichtet sein, dass sie an derselben Position 84a in den Lichtpfad eintreten, mit gegensätzlichen Tangentialkomponenten ihrer Richtung.

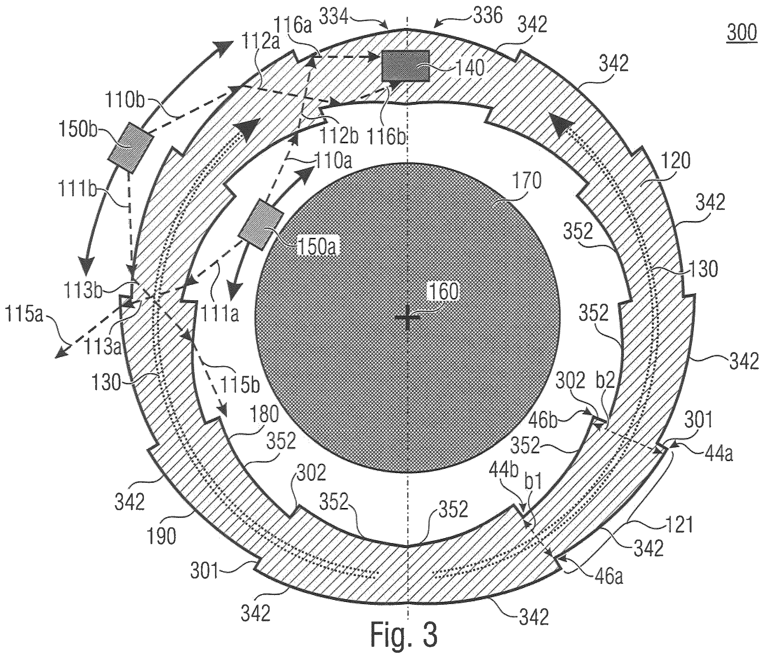

Weitere Beispiele der optischen Vorrichtung 10 mit einem ersten Lichtpfadsegment und einem zweiten Lichtpfadsegment sind im Hinblick auf die Figuren 3-7 und 9 und 10 beschrieben.

Im Folgenden werden Beispiele der optischen Vorrichtung 10 beschrieben, bei denen der Lichtpfad 20 mittels Lichtleiterstrukturen oder mittels Spiegelelementen implementiert ist.

Die Anzahl der Lichtpfadsegmente, die Länge deren Kreisbögen, sowie die Anzahl der Sendeeinheiten urid/oder die Anzahl der von den jeweiligen Sendeeinheiten ausgesendeten Lichtstrahlen kann dabei unabhängig davon gewählt sein, ob die optische Vorrichtung mittels Lichtleiterstrukturen oder mittels Spiegelelementen implementiert ist, so dass Ausführungsformen, welche an Lichtleiterstrukturen gezeigt sind, auch mittels Spiegelelementen implementiert werden können und umgekehrt.

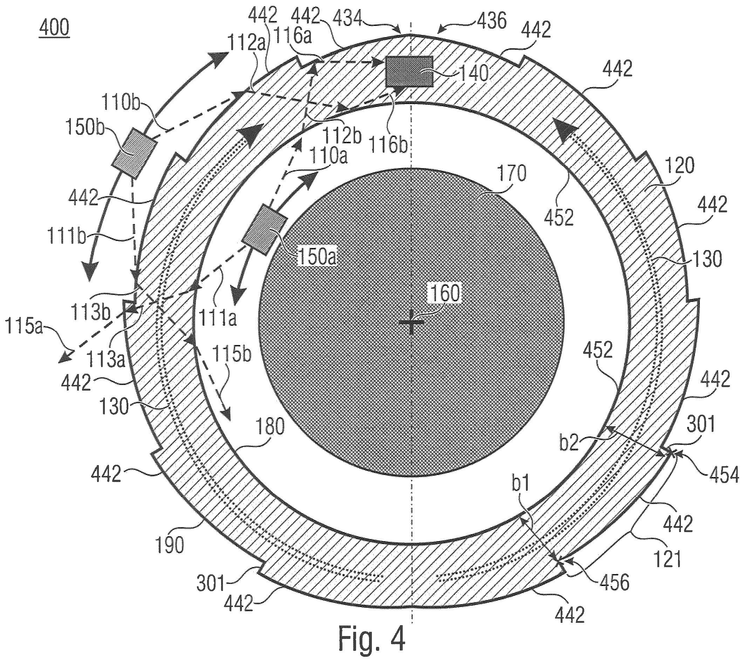

Fig. 4 zeigt eine Draufsicht einer optischen Vorrichtung 400 gemäß einem Beispiel der vorliegenden Offenbarung. Die optische Vorrichtung 400 kann der optischen Vorrichtung 10 entsprechen. Der Lichtpfad der optischen Vorrichtung 400 weist ein erstes Lichtpfadsegment 434 und ein zweites Lichtpfadsegment 436 auf, die Beispiele für das Lichtpfadsegment 30, 30a, 30b darstellen, und deren vorbestimmte Laufrichtungen 130 entgegengesetzt sind. Die vorbestimmten Laufrichtungen 130 sind Beispiele der vorbestimmten Laufrichtung 34.

Die Lichtpfadsegmente 434, 436 weisen Lichtpfadelemente 121 auf, welche den Lichtpfadelementen 40 aus Fig. 14 bzw. den Lichtpfadelementen 40a-1, ... 40b-k, 40b-1, ..., 40b-m entsprechen können, sind von einem oder mehreren Lichtleitern gebildet. Jedes der Lichtpfadelemente 121 ist entlang einer radialen Richtung nach außen jeweils zumindest teilweise von ersten Grenzfläche 442 begrenzt. Die ersten Grenzflächen 442 können den ersten Grenzflächen 42 entsprechen. Ferner ist jedes der Lichtpfadelemente 121 entlang einer radialen Richtung nach innen jeweils zumindest teilweise von einer zweiten Grenzfläche 452 begrenzt. Die ersten Grenzflächen 442 können jeweils Teil einer äußeren Grenzfläche 190 eines Lichtleiters 120 sein. Die zweiten Grenzflächen 452 können jeweils Teil einer inneren Grenzfläche 180 des Lichtleiters 120 sein. In anderen Worten, die optische Vorrichtung 400 beinhaltet eine Lichtleiterstruktur mit keilförmigen Lichtleiterelementen an einer Außenseite 190 der Lichtleiterstruktur. Bei alternativen Beispielen ist jedes der Lichtpfadelemente 121 entlang einer radialen Richtung nach innen jeweils zumindest teilweise von einer der zweiten Grenzflächen 452 begrenzt und entlang einer radialen Richtung nach außen jeweils zumindest teilweise von einer ersten Grenzfläche 442 begrenzt. D.h., jedes der Lichtpfadelemente 121 ist entlang einer radialen Richtung nach innen und nach außen zumindest teilweise von jeweils einer unterschiedlichen aus der ersten Grenzfläche 42, 442 und einer zweiten Grenzfläche 452 begrenzt. Die zweiten Grenzflächen 452 der Lichtpfadelemente sind jeweils ausgebildet, um Licht, welches von dem Lichtpfad mit einem Einfallswinkel größer als ein kritischer Winkel der jeweiligen zweiten Grenzfläche auf die jeweilige zweite Grenzfläche trifft, zu reflektieren, um einen sich in einer für das jeweilige Lichtpfadsegment vorbestimmten Laufrichtung 130 entlang des Lichtpfads ausbreitenden Lichtstrahl auf dem Lichtpfad zu halten. Die Lichtpfadelemente 121 sind keilförmig und weisen an einem ersten tangentialen Ende 454 in radialer Richtung eine größere Ausdehnung auf als an einem zweiten tangentialen Ende 456.

Die Lichtpfadelemente 121 können beispielsweise so angeordnet sein, dass für die Lichtpfadelemente eines jeweiligen Lichtpfadsegments 434, 436 die Richtung entlang des Lichtpfads, entlang derer man von dem ersten tangentialen Ende 454 des Lichtpfadelements über das Lichtpfadelement zu dem zweiten tangentialen Ende 456 des Lichtpfadelements gelangt, einheitlich ist. Für die Lichtpfadelemente eines jeweiligen Lichtpfadsegments 434, 436 kann die Richtung entlang des Lichtpfads, entlang derer man von dem ersten tangentialen Ende 454 entlang des Lichtpfadelements zu dem zweiten tangentialen Ende 456 des Lichtpfadelements gelangt, der für das jeweilige Lichtpfadelement vorbestimmten Laufrichtung 130 entgegengesetzt sein.

Bei Beispielen, wie in Fig. 4 gezeigt, bilden die zweiten Grenzflächen 452 eines jeweiligen Lichtpfadsegments zusammen einen Kreisbogen um den Kreismittelpunkt des Lichtpfads.

Weitere Details der optischen Vorrichtung 400 sind in Hinblick auf Fig. 3 beschrieben. Ferner sind Merkmale, welche in Bezug auf Fig. 1 und Fig. 2 erklärt sind, auch auf die Vorrichtung 400 anwendbar, wobei sich diese zumindest in der Ausgestaltung der Lichtleiterelemente und somit in der Ausbreitung der Lichtstrahlen von der Vorrichtung 100, 200 unterscheidet.

Fig. 3 zeigt eine schematische Darstellung einer optischen Vorrichtung 300 gemäß einem Beispiel der vorliegenden Offenbarung. Die optische Vorrichtung 300 kann der optischen Vorrichtung 10 entsprechen. Bei der optischen Vorrichtung 300 begrenzen die ersten Grenzflächen 342 die Lichtpfadsegmente 334, 336 in radialer Richtung nach außen, und die zweiten Grenzflächen 352 die Lichtpfadsegmente in radialer Richtung nach innen. Die zweiten Grenzflächen 352 sind entsprechend der ersten Grenzflächen ausgebildet. D.h., das hierin, insbesondere auch in Hinblick auf Fig. 14 und Fig. 4 in Bezug auf die ersten Grenzflächen 42, 442 Beschriebene, beispielsweise zu Orientierung und Anordnung der ersten Grenzflächen 42, 442 trifft soweit nicht anders beschrieben auch auf die zweiten Grenzflächen 352 der optischen Vorrichtung 300 zu. Dass die zweiten Grenzflächen entsprechend der ersten Grenzflächen ausgebildet sind, soll nicht bedeuten, dass innerhalb eines Ausführungsbeispiels die ersten Grenzflächen im Vergleich zu den zweiten Grenzflächen notwendigerweise identisch zu den zweiten Grenzflächen ausgestaltet sind.

Die optische Vorrichtung 400 weist ein erstes Lichtpfadsegment 334 und ein zweites Lichtpfadsegment 336 auf, deren vorbestimmte Laufrichtungen 130 gegensätzlich sind. Die ersten Grenzflächen 342 können jeweils Teil der äußeren Grenzfläche 190 des Lichtleiters 120 sein, und können entsprechend der ersten Grenzflächen 442 angeordnet sein. Die zweiten Grenzflächen 352 können jeweils Teil einer inneren Grenzfläche 180 des Lichtleiters 120 sein.

Bei Beispielen der optischen Vorrichtung 300 liegt das erste tangentiale Ende 44a der ersten Grenzflächen 342 eines jeweiligen Lichtpfadelements dem zweiten tangentialen Ende 46b der zweiten Grenzfläche 352 des jeweiligen Lichtpfadelements in radialer Richtung gegenüber. Entsprechend liegt das zweite tangentiale Ende 46a der ersten Grenzflächen ferner 342 eines jeweiligen Lichtpfadelements dem ersten tangentialen Ende 44b der zweiten Grenzfläche 352 des jeweiligen Lichtpfadelements in radialer Richtung gegenüber, so wie in Fig. 3 gezeigt. Somit ist eine Verkippung der ersten und zweiten Grenzflächen in Bezug auf die tangentiale Richtung, oder die Rotationsrichtung 49 der Oberflächennormalen 45 wie in Bezug auf Fig. 15 erklärt, für die ersten Grenzflächen 342 und die zweiten Grenzflächen 352 entgegengesetzt.

Fig. 13 zeigt einen Ausschnitt des Lichtpfadsegments 334, 336 gemäß einem weiteren Beispiel. Der gezeigte Ausschnitt beinhaltet die Lichtpfadsegmente 40-1, 40-2, 40-3. Bei dem in Fig. 13 gezeigten Beispiel ist für die ersten Grenzflächen 342 eines jeweiligen Lichtpfadsegments 334, 336 die Richtung, entlang derer man von dem ersten tangentialen Ende 44a entlang der jeweiligen ersten Grenzfläche 352 zu dem zweigen tangentialen Ende 46a gelangt, der für das jeweilige Lichtpfadsegment 334, 336 vorbestimmten Laufrichtung 130 entgegengesetzt. Für die zweiten Grenzflächen 352 eines jeweiligen Lichtpfadsegments 334, 336 entspricht dagegen die Richtung, entlang derer man von dem ersten tangentialen Ende 44b entlang der jeweiligen zweiten Grenzfläche zu dem zweiten tangentialen Ende 46b gelangt, der für das jeweilige Lichtpfadsegment 334, 336 vorbestimmten Laufrichtung. Auch bei diesem Beispiel können die zweiten Grenzflächen entsprechend der ersten Grenzflächen ausgebildet sein. Somit ist die Verkippung bezüglich der jeweiligen tangentialen Richtung, oder die Rotationsrichtung 49 der Oberflächennormalen 45 wie in Bezug auf Fig. 15 erklärt, für die ersten Grenzflächen 342 und die zweiten Grenzflächen 352 entgegengesetzt. Das führt zu einer keilförmigen Ausgestaltung der Lichtpfadelemente, wobei die tangentialen Enden der jeweiligen ersten und zweiten Grenzflächen eines Lichtpfadelements sich nicht zwangsläufig gegenüberliegen müssen. Vielmehr können diese versetzt zueinander angeordnet sein.

Das kann beispielsweise heißen, dass für ein Lichtpfadsegment 342 eine Richtung entlang des Lichtpfads, entlang derer man von dem ersten tangentialen Ende 44b der zweiten Grenzflächen 352 entlang der zweiten Grenzflächen 352 zu dem zweiten tangentialen Ende 46b der zweiten Grenzflächen 352 gelangt, gegensätzlich zu einer Richtung entlang des Lichtpfads sein kann, entlang derer man von dem ersten tangentialen Ende 44a der ersten Grenzflächen 342 entlang der ersten Grenzflächen 46a zu dem zweiten tangentialen Ende der ersten Grenzflächen 342 gelangt.

Beispielsweise können die ersten und die zweiten Grenzflächen 342, 352 in tangentialer Richtung zum Lichtpfad zueinander verschoben angeordnet sein. Zum Beispiel unterscheiden sich die tangentialen Positionen zumindest mehrerer der ersten und zweiten Enden der ersten Grenzflächen von den tangentialen Positionen der ersten und zweiten Enden der zweiten Grenzflächen. Dadurch kann möglicherweise eine Einkoppeleffizienz erhöht werden.

Die optische Vorrichtung 400 kann also der optischen Vorrichtung 300 entsprechen, wobei die Lichtleiterstruktur der optischen Vorrichtung 400 dahingehend angepasst ist, dass nur die äußere Grenzfläche 190 angepasst ist um eine Keilförmige Struktur zu erzeugen. Ebenso ist es denkbar nur die innere Grenzfläche anzupassen. Somit können die ersten Grenzflächen 342 den ersten Grenzflächen 442 wie im Hinblick auf Fig. 4 beschrieben entsprechen. Beispiele der optischen Vorrichtung 300 können sich von Beispielen der optischen Vorrichtung 400 also hauptsächlich durch die Ausgestaltung der Lichtpfadelemente 121 unterscheiden. Sowohl bei der optischen Vorrichtung 300 als auch bei der optischen Vorrichtung 400 führt die Ausgestaltung der Lichtpfadelemente 121 zu einer keilförmigen Anordnung gegenüberliegender erster und zweiter Grenzflächen.

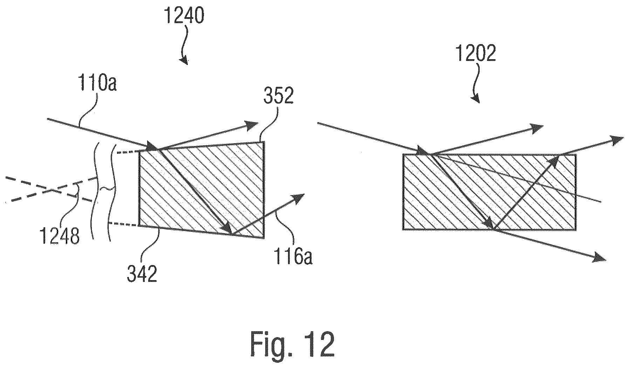

Bei Beispielen beträgt ein Keilwinkel (beispielsweise der Keilwinkel 1248 wie in Bezug auf Fig. 12 beschrieben) zwischen jeweils einer der ersten Grenzflächen oder der zweiten Grenzflächen zwischen 1° und 10° oder zwischen 2° und 6°. Der Keilwinkel ist dabei die Summe eines ersten Winkels der jeweiligen ersten Grenzfläche und eines zweiten Winkels der jeweiligen zweiten Grenzfläche. Die jeweilige erste Grenzfläche 42 und die jeweilige zweite Grenzfläche können demselben Lichtpfadelement 42 zugeordnet sein. Der erste Winkel ist der kleinste Winkel zwischen der Verbindungslinie zwischen dem ersten tangentialen Ende 44a und dem zweiten tangentialen Ende 46a der jeweiligen ersten Grenzfläche 342 und der Tangente an den Kreisbogen 11 des Lichtpfads in einem Punkt, der in tangentialer Richtung mittig zwischen dem ersten tangentialen Ende 44a und dem zweiten tangentialen Ende 46a der jeweiligen ersten Grenzfläche liegt. Der zweite Winkel ist der kleinste Winkel zwischen der Verbindungslinie zwischen dem ersten tangentialen Ende 44b und dem zweiten tangentialen Ende 46b der jeweiligen zweiten Grenzfläche 352 und der Tangente an den Kreisbogen 11 des Lichtpfads in einem Punkt, der in tangentialer Richtung mittig zwischen dem ersten tangentialen Ende 44b und dem zweiten tangentialen Ende 46b der jeweiligen zweiten Grenzfläche liegt. Dies kann entsprechend auf die erste Grenzfläche 442 und die zweite Grenzfläche 452 der in Fig. 4 gezeigten Ausführungsform zutreffen, wobei die ersten Enden der jeweiligen Grenzflächen an dem ersten Ende 454 des Lichtpfadsegments 121 und die zweiten Enden der jeweiligen Grenzflächen an dem zweiten Ende 456 des Lichtpfadsegments 121 angeordnet sein können.

In anderen Worten, bei den in Fig. 3 und Fig. 4 gezeigten optischen Vorrichtungen 300, 400 sind die äußere Grenzfläche 190 und innere Grenzfläche 180 keilförmig zueinander angeordnet. Daraus ergibt sich, dass der Abstand zwischen beiden Grenzflächen nicht mehr konstant ist, sondern ausgehend von einem Minimalabstand b1 ansteigt bis zu einem Maximalabstand b2. Die Lichtleiterstruktur setzt sich dafür aus mehreren Keilförmigen Teilstücken 121 zusammen, welche miteinander verbunden sind. Durch die Keilförmige Anordnung ist es möglich, die eingekoppelten Strahlen 112a, 112b durch dann mögliche Totalreflexion an einem Austreten aus dem Lichtleiter 120 zu hindern und damit sicher in die Lichtleiterstruktur einzukoppeln. Die Einkopplung wird dabei nur in eine Richtung ermöglicht 110a, 110b. Es entsteht eine Vorzugsrichtung 130 in welche die Lichtleiterstruktur sowohl eine Einkopplung als auch eine Weiterleitung unterstützt. Für Licht in entgegengesetzter Richtung 111a, 111b wird dies unterbunden. Dies ist in Bezug auf die gewünschten Datenraten wichtig, um zum Beispiel auch mehr Wege Ausbreitung zu unterbinden. Die Sendeeinheit 150 ist vorteilhafterweise dafür ausgebildet, in beide Umlaufrichtungen Licht 110a, 110b, 111a, 111b auszusenden. Über die Lichtleiterstruktur wird dann immer nur der Teilstrahl mit dem kürzesten Lichtweg zwischen Sender 150 und Empfänger 140 weitergeleitet. Steht der Sender genau 180° versetzt zum Empfänger, tritt ein Sonderfall ein, in welchem beide Teilstrahlen 110, 111 weitergeleitet werden. Durch die dann gleiche Weglänge ist keine Mehrwegeausbreitung gegeben und eine Datenrate im Bereich >10⁹ bit/s möglich.

An der Kontaktstelle zweier Keilförmiger Teilstücke entsteht in Ausbreitungsrichtung 130 eine Stufe 301 beim Übergang von einem breiten Ende eines Teilstücks b2 auf ein schmales Ende des darauffolgenden Teilstücks. Diese Flächen 301, 302 stellen potentiell eine Auskoppelstelle dar und können zu einer Teilweisen Lichtauskopplung und damit Verlust führen. Über die Stärke der Keilform (b1 - b2) und den Übergangsstellen 301, 302 kann gezielt eine Signaldämpfung eingestellt werden um gezielt Mehrwegeausbreitung zu unterbinden. Auf dies weise wird sichergestellt, dass das Datensignal nur auf dem Kürzesten Weg übertragen wird.

In Fig. 3 und Fig. 4 sind ferner zwei Sendeeinheiten 150a, 150b gezeigt, wovon eine oder beide optional Teil der optischen Vorrichtung 300 sein können. Die Sendeeinheit 150a ist in radialer Richtung innerhalb des Lichtpfads angeordnet, während die Sendeeinheit 150b in radialer Richtung außerhalb des Lichtpfads angeordnet ist. Somit stellen die Sendeeinheiten 150a und 150b jeweils ein Beispiel für die Anordnung einer Sendeeinheit, beispielsweise einer der Sendeeinheiten 80a oder 80b dar. Es kann ausreichend oder sogar vorteilhaft sein, an einer tangentialen Position entweder innerhalb oder außerhalb des Lichtpfads eine Sendeeinheit anzuordnen. Die Sendeeinheit 150a, 150b ist ausgelegt, um einen ersten Lichtstrahl 110a, 110b und einen zweiten Lichtstrahl 111a, 111b in den Lichtpfad zu strahlen. Der erste Lichtstrahl 110 a, 110 b weist eine tangentiale Komponente in Richtung der vorbestimmten Laufrichtung 130 des ersten Lichtpfadsegments 334, 434 auf. Der zweite Lichtstrahl 111 a, 111 b weist eine tangentiale Komponente in Richtung der vorbestimmten Laufrichtung 130 des zweiten Lichtpfadsegments 336, 436 auf. Trifft der erste Lichtstrahl 110 a bzw. 110 b auf eine Eintrittsgrenzfläche eines der Lichtpfadelemente 121 des ersten Lichtpfadsegments 334, 434, so wird der Lichtstrahl in den Lichtleiter, bzw. den Lichtpfad, gebrochen, so dass sich in dem Lichtleiter ein Eintrittslichtstrahl 112a bzw. 112b ausbreitet. Die Eintrittsgrenzfläche kann dabei die erste oder die zweite Grenzfläche 342, 352, 442, 452 des Lichtpfadelements 121 sein, je nach Anordnung der Grenzflächen und je nachdem ob die Sendeeinheit 150a, 150b innerhalb oder außerhalb des Lichtpfads angeordnet ist. Trifft der Eintrittslichtstrahl 112a bzw. 112b auf eine der Eintrittsgrenzfläche gegenüberliegende Grenzfläche des Lichtpfadsegments, kann aufgrund der Orientierung der ersten und/oder zweiten Grenzflächen 342, 352, 442, 452 der Eintrittswinkel des Eintritts Lichtstrahls auf die der Eintrittsgrenzfläche gegenüberliegende Grenzfläche so groß sein, dass Totalreflexion auftritt und sich somit ein reflektierter Lichtstrahl 116a, 116b innerhalb des Lichtpfads ausbreitet. Trifft der zweite Lichtstrahl 111 a bzw. 111 b auf die Eintrittsgrenzfläche eines der Lichtpfadelemente 121 des ersten Lichtpfadsegments 334, 434, so wird der Lichtstrahl in den Lichtleiter, bzw. den Lichtpfad, gebrochen, so dass sich in dem Lichtleiter ein Eintrittslichtstrahl 113a bzw. 113b ausbreitet. Trifft der Eintrittslichtstrahl 113a bzw. 113b auf eine der Eintrittsgrenzfläche gegenüberliegende Grenzfläche des Lichtpfadsegments, kann aufgrund der Orientierung der ersten und/oder zweiten Grenzflächen 342, 352, 442, 452 der Eintrittswinkel des Eintrittslichtstrahls auf die der Eintrittsgrenzfläche gegenüberliegende Grenzfläche so groß sein, dass der reflektierte Lichtstrahl 115a, 115b aus dem Lichtpfad austritt. Somit entsteht die vorbestimmte Laufrichtung bzw. Vorzugsrichtung des Lichtpfadsegments. Im Hinblick auf das zweite Lichtpfadsegment 336, 436 können die Rollen der ersten Lichtstrahlen 110a, 110b und zweiten Lichtstrahlen 111a, 111b aufgrund deren gegensätzlicher Tangentialkomponenten vertauscht sein.

Bei Beispielen weist die optische Vorrichtung 300, 400 ferner zumindest eine der Sendeeinheiten 150a, 150b auf. Dabei ist die zumindest eine Sendeeinheit und der Lichtpfad so angeordnet, dass die zumindest eine Sendeeinheit auf einer zu dem Lichtpfad konzentrischen Kreisbahn relativ zu dem Lichtpfad rotierbar ist, wobei der Radius der konzentrischen Kreisbahn kleiner oder größer als der Radius des Kreisbogens des Lichtpfads ist. Dabei ist die zumindest eine Sendeeinheit ausgebildet, um zumindest einen Lichtstrahl 110a, 110b, 111a, 111b, welcher ein Signal signalisiert, in Richtung der Kreisbahn des Lichtpfads auszusenden. Die Abstrahlrichtung des zumindest einen Lichtstrahls ist so gewählt ist, dass der zumindest eine Lichtstrahl bei einem Auftreffen auf eine der ersten Grenzflächen 42, 342, 442 oder der zweiten Grenzflächen 352, 452 eines des zumindest einen Lichtpfadsegments 30, 334, 336, 434, 436 durch Brechung in den Lichtpfad einkoppelt. Zum Beispiel ist die Abstrahlrichtung so gewählt, dass an der ersten oder zweiten Grenzfläche, an welcher der Lichtstrahl auf das Lichtpfadelement trifft, also bei Einkopplung, so wenig wie möglich Fresnelreflexion entstehen gleichzeitig aber an gegenüberliegen Grenzfläche noch Totalreflexion stattfindet.

Bei Beispielen ist die Abstrahlrichtung des zumindest einen Lichtstrahls 110a, 110b, 111a, 111b so gewählt, dass der Einfallswinkel des zumindest einen Lichtstrahls beim Auftreffen auf eine der ersten oder zweiten Grenzflächen weniger als 80° beträgt, oder weniger als 75° beträgt, oder in einem Bereich zwischen 60° und 80° liegt, oder in einem Bereich zwischen 65° und 75° liegt. Für eine Grenzfläche zwischen Luft oder einem anderen Gas und einem Lichtwellenleiter wird in diesem Bereich des Einfallswinkels ein großer Teil des Lichtstrahls in den Lichtpfad gebrochen. Ferner wird ermöglicht, dass der Eintrittslichtstrahl 112a, 112b an der der Eintrittsgrenzfläche gegenüberliegenden Grenzfläche gebrochen mittels Totalreflexion reflektiert wird. Der Einfallswinkel ist auch in Bezug auf Fig. 12 näher erläutert.

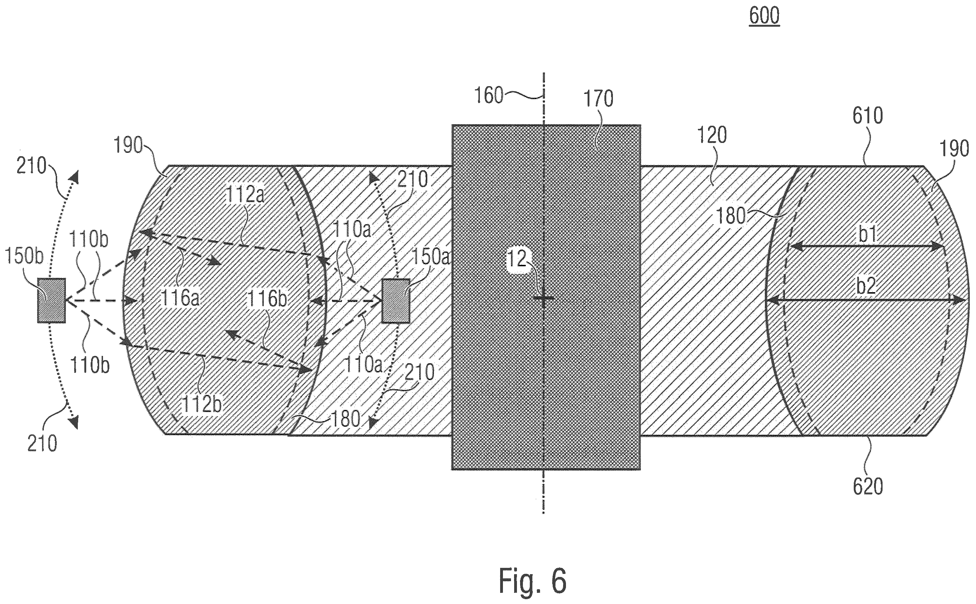

Bei Beispielen sind die die Lichtpfadelemente der Lichtpfadsegmente 334, 336, 434, 436 radial nach außen begrenzenden Grenzflächen 190 entlang der axialen Richtung des Kreisbogens konvex bezüglich des Kreismittelpunkt 12 des Kreisbogens ausgebildet sind, und wobei die die Lichtpfadelemente radial nach innen begrenzenden Grenzflächen 180 entlang der axialen Richtung des Kreisbogens konkav bezüglich des Kreismittelpunkts des Kreisbogens ausgebildet sind. Beispiele solcher Lichtpfadsegmente sind in den Fig. 5 und 6 gezeigt.

Fig. 5 zeigt eine Schnittansicht entlang einer Ebene entlang der Mittelpunktsachse 160 einer optischen Vorrichtung 500 gemäß einem Beispiel der Offenbarung. Die optische Vorrichtung 500 kann der optischen Vorrichtung 300, 400 entsprechen. Die optische Vorrichtung 500 beinhaltet eine Lichtleiterstruktur mit keilförmigen Lichtleiterelementen und kreisrunder Querschnittsfläche. Die Keilform der Lichtleitelemente wird hierbei durch zwei kreisförmige Querschnittsprofile b1, b2 dargestellt. Der gestrichelte Kreis stellt das schmalere Ende eines keilförmigen Lichtleiterelementes 121 dar. Der durchgezogene Kreis das breitere Ende eines keilförmigen Lichtleiterelements 121. Der Querschnitt der Lichtleiterstruktur 220 ist symmetrisch kreisrund. Die Sendeeinheit 150a und/oder die Sendeeinheit 150b kann in diesem Fall um 360° um die Querschnittsfläche bezüglich der Kreisebene des Lichtpfads angeordnet sein. Die gezeigten Sendeeinheiten sind hier als beispielhaft zu sehen. Es ist technisch möglich mehrere Sender um die Querschnittsfläche 220 der Lichtleiterstruktur anzuordnen, um zum Beispiel die zur Verfügung stehende optische Leistung zu erhöhen. Die Verwendung eines einzelnen Senders an einer jeweiligen tangentialen Position hat aber den Vorteil, dass es einfacher ist, beide Signale synchron zu führen und ohne Laufzeitunterschiede am Empfänger 140 zu detektieren.

Fig. 6 zeigt eine Schnittansicht einer optischen Vorrichtung 600 gemäß einem Beispiel der Offenbarung. Die optische Vorrichtung 600 beinhaltet eine Lichtleiterstruktur mit keilförmigen Lichtleiterelementen und gewölbter Innen und Außenfläche. Die optische Vorrichtung 600 kann der optischen Vorrichtung 300 oder 400 entsprechen. Fig. 6 zeigt die optische Vorrichtung 600 im Querschnitt entlang einer Ebene entlang der Mittelpunktsachse 160. Im Unterschied zu der optischen Vorrichtung 500 weist der Lichtleiter der optischen Vorrichtung 600 eine angepasste, nicht kreisrunde Querschnittsfläche auf. Die Innere Grenzfläche 180 und die äußere Grenzfläche 190 sind hier nicht zwingend miteinander verbunden. Dies hat zur Folge, dass eine obere Verbindungsfläche 610 und/oder eine untere Verbindungsfläche 620 entstehen kann. Dies ist jedoch nicht zwingend erforderlich. Die Außen und Innen Flächen können auch direkt miteinander verbunden sein. Die Form der inneren und äußeren Grenzflächen kann verschiedene Formen annehmen. Dies können sphärische, asphärische, parabolische Krümmungen oder auch beliebige Freiformen sein. Eine gezielte geordnete Lichtführung ist hier anzustreben, um einen Laufzeitunterschied zu vermeiden, welcher ansonsten die maximale Datenrate limitieren würde.

Durch die Keilförmige Anordnung der Innen- und Außenflächen, wie in Bezug auf die Figuren 3 bis 8 gezeigt, wird das Licht in Vorzugsrichtung 130 weniger stark zur Rotationsachse, sondern mehr nach radial außen reflektiert. Im Idealfall wird das Licht, wenn es einmal eingekoppelt ist, ausschließlich von der äußeren Grenzfläche geführt und berührt die Innenfläche gar nicht. Über die Ausformung dieser 190 kann dadurch das Lichtsignal sehr gut gesteuert/geführt werden und eine Mehrwegeausbreitung verhindert/minimiert werden. Dies trifft insbesondere auf die beschriebenen Ausführungsformen 300, 400, 500, 600, 700, 800, 900 mittels Lichtleiterelementen oder Spiegelelementen zu, aber auch allgemein für erfindungsgemäße Ausgestaltung der Lichtpfadsegmente 30 der optischen Vorrichtung 10.

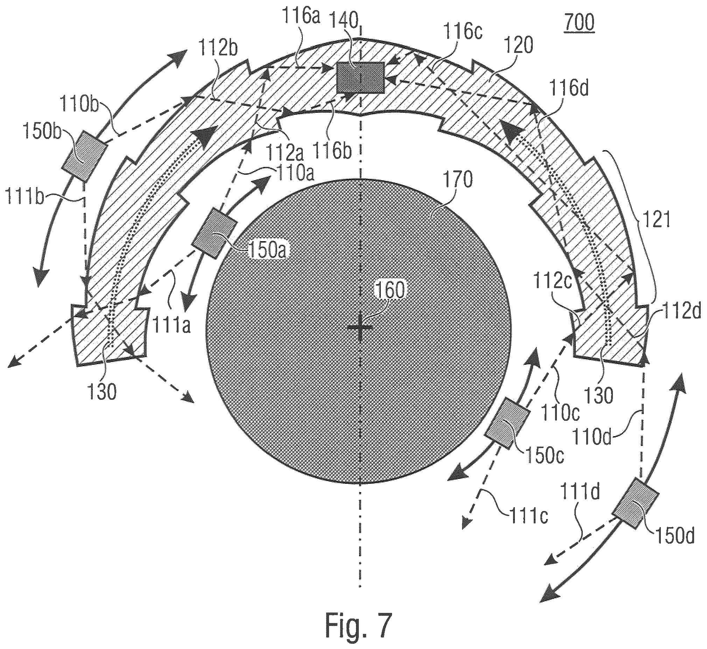

Fig. 7 zeigt eine Draufsicht einer optischen Vorrichtung 700 gemäß einem Beispiel der Offenbarung. Die optische Vorrichtung 700 beinhaltet eine Lichtleiterstruktur mit keilförmigen Lichtleiterelementen. Die optische Vorrichtung 700 kann der optischen Vorrichtung 10 entsprechen, und kann außerdem der optischen Vorrichtung 300, 500, 600 entsprechen, mit dem Unterschied, dass sie einer Vielzahl mindestens 2 an Sendeelementen 150, welche gleichverteilt um die Rotationsachse entweder innerhalb 150a, 150c oder außerhalb 150b, 150d dem Bereich der Lichtleiterstruktur angeordnet sind. Durch die Erhöhung der Senderanzahl, kann die Größe der Lichtleiterstruktur reduziert werden. Dabei muss die Lichtleiterstruktur gerade so groß sein, dass mindestens ein Sender immer den Empfänger über die Lichtleiterstruktur erreichen kann. Je mehr Sender vorhanden sind desto kleiner kann theoretisch die Lichtleiterstruktur werden. Die Lichtleiterstruktur ist dabei gespiegelt aufgebaut und die Empfängereinheit sitzt in der Mitte, so dass die Spiegelachse genau durch den Empfänger verläuft. Die Keil Struktur ist wiederum so aufgebaut, dass die Vorzugsrichtung 130 von beiden Seiten hin zum Empfänger 140 verlaufen. Das ist erforderlich, um eine unterbrechungsfreie Datenübertragung während Rotation zu gewährleisten. Laufzeitunterschiede zwischen zwei unterschiedlich zum Empfänger beabstandeten Sendern werden durch die gezielte Dämpfung der Lichtleiterstruktur vermieden. Es setzt sich so immer der Sender mit dem kürzesten Abstand durch. Sinken die Laufzeitunterschiede zwischen den Sendern, durch weiter rotieren gleichen sich auch die Anteile am Empfangssignal an. Auf diese Weise wird ein Laufzeitsprung vermieden und eine unterbrechungsfreie Übertragung gelingt.

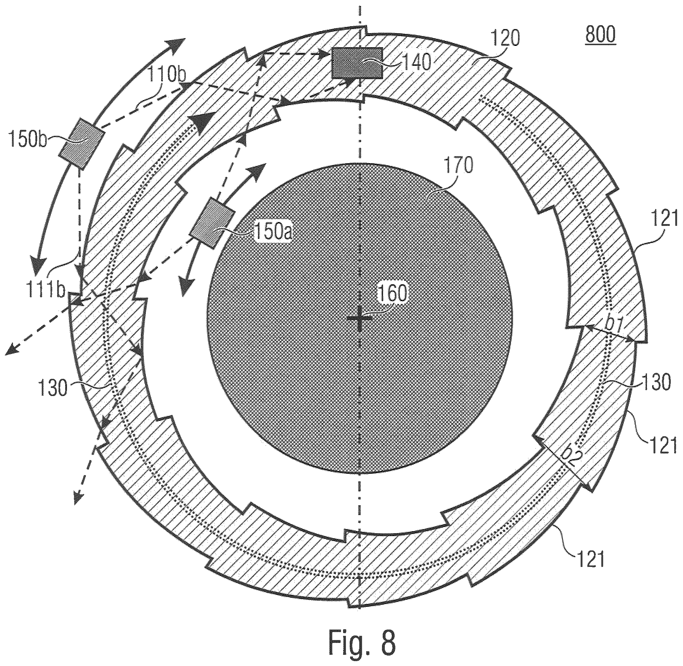

Fig. 8 zeigt eine Darstellung einer optischen Vorrichtung 800 gemäß einem Beispiel der Offenbarung. Die optische Vorrichtung 800 beinhaltet eine Lichtleiterstruktur mit keilförmigen Lichtleiterelementen ohne symmetrische Anordnung, beispielsweise mit nur einem Lichtpfadsegment. Die optische Vorrichtung 800 kann der optischen Vorrichtung 10 entsprechen. Die optische Vorrichtung 800 weist ein Lichtpfadsegment auf. Die Ausgestaltung des Lichtpfadsegments kann der einer der optischen Vorrichtungen 300, 400, 500, 600, 700, 900 entsprechen. Für niedrige Datenraten kann die optische Vorrichtung eine einfache Implementierungsmöglichkeit bieten.

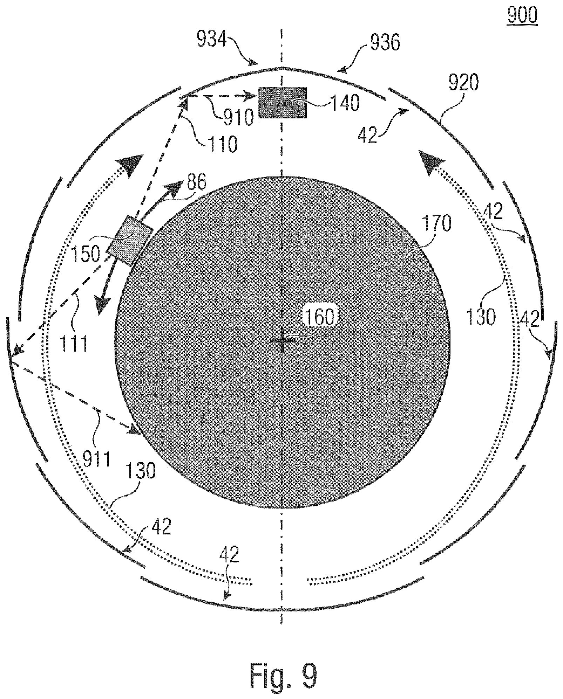

Fig. 9 zeigt eine schematische Darstellung einer optischen Vorrichtung 900 gemäß einem Beispiel der vorliegenden Offenbarung. Bei der optischen Vorrichtung 900 ist der Lichtpfad, als Alternative zu Lichtleiterelementen, mit verkippt zueinander angeordneten Spiegelelementen 920 umgesetzt. Die optische Vorrichtung 900 kann der optischen Vorrichtung 10 entsprechen. Die ersten Grenzflächen 42 können jeweils zumindest Teil eines der Spiegelelemente 920 sein. Bei der optischen Vorrichtung 900 begrenzen die ersten Grenzflächen 42 den Lichtpfad 20 in radialer Richtung nach außen, so dass der Lichtpfad innerhalb der Spiegelelemente verläuft D.h., bei der optischen Vorrichtung 900 sind die ersten Grenzflächen 42 als Spiegel für das Licht des Lichtpfads 20 ausgebildet, um Licht, welches von dem Lichtpfad auf die jeweilige erste Grenzfläche 42 trifft, zu reflektieren. Bei dem in Fig. 9 gezeigten Beispiel weist der Lichtpfad ein erstes und ein zweites Lichtpfadsegment 934, 936 mit gegensätzlichen vorbestimmten Laufrichtungen auf. Es ist aber auch möglich, die optische Vorrichtung 900 mit einem einzelnen Lichtpfadsegment, ähnlich der optischen Vorrichtung 800 zu implementieren.

Bei Beispielen der optischen Vorrichtung 900 sind für die ersten Grenzflächen 42 eines jeweiligen Lichtpfadsegments 30 die Richtungen, entlang derer man von dem ersten tangentialen Ende entlang der jeweiligen ersten Grenzfläche zu dem zweiten tangentialen Ende gelangt, der für das jeweilige Lichtpfadelement vorbestimmten Laufrichtung entgegengesetzt. Somit kann eine Vorzugsrichtung für die Ausbreitung von Licht entlang der vorbestimmten Laufrichtung entstehen.

Bei Beispielen weist die optische Vorrichtung 900 zumindest eine Sendeeinheit 150 auf, wobei die zumindest eine Sendeeinheit und der Lichtpfad so angeordnet sind, dass die zumindest eine Sendeeinheit auf einer zu dem Lichtpfad konzentrischen Kreisbahn 86 relativ zu dem Lichtpfad rotierbar ist, wobei der Radius der konzentrischen Kreisbahn kleiner als der Radius des Kreisbogens des Lichtpfads ist. Die zumindest eine Sendeeinheit ausgebildet, um zumindest einen Lichtstrahl 110, 111, welcher ein Signal signalisiert, in Richtung der Kreisbahn des Lichtpfads auszusenden. Die Abstrahlrichtung des zumindest einen Lichtstrahls ist so gewählt, dass der zumindest eine Lichtstrahl bei einer Reflexion an einer der ersten Grenzflächen 42 eines des zumindest einen Lichtpfadsegments in den Lichtpfad einkoppelt.

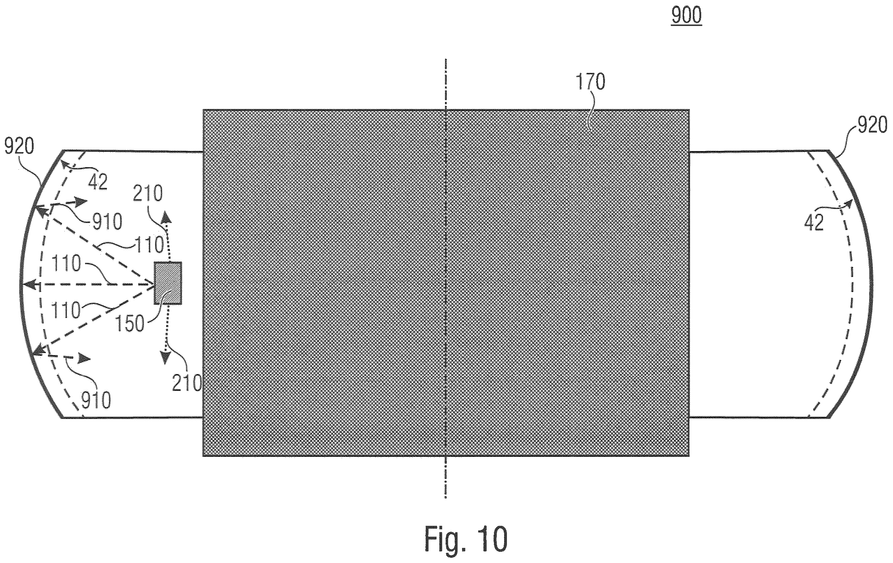

Fig. 10 zeigt eine Schnittansicht der optischen Vorrichtung 900 entlang einer Ebene entlang der Kreisachse 160. Bei dem in Fig. 10 gezeigten Beispiel der optischen Vorrichtung 900 sind die ersten Grenzflächen entlang der axialen Richtung des Kreisbogens konvex bezüglich des Kreismittelpunkt des Kreisbogens ausgebildet. Die axiale Richtung des Kreisbogens bezeichnet eine Richtung senkrecht zu der Kreisebene des Kreisbogens.

In anderen Worten, die optische Vorrichtung 900, wie in den Figuren 9 und 10 gezeigt, kann eine alternative zu der Umsetzung der Erfinderischen Idee mittels Lichtwellenleitern darstellen. Dabei wird das Licht anstelle von einem optisch Medium direkt in Luft geleitet und mittels Spiegelelementen umgeleitet. Diese erfüllen dabei die Aufgabe der Äußeren Grenzfläche 190 und sind nach dem gleichen prinzip, wie die Lichtleiterelemente 121, angeordnet und geformt. Wie in Darstellung 900 gezeigt bietet sich hier eine Unterteilung in mehrere Spiegelelemente 920 an, da dies die Fertigung begünstigt. Eine Verbindung zu einem großen Spiegel ist jedoch denkbar. Der Sender/ die Sender 150 ist/sind zweckmäßigerweise innerhalb der Spiegelelemente, also innerhalb des Lichtpfads angeordnet. Die Ausgangsstrahlen 110, 111 werden von den Spiegelelementen nach innen reflektiert. Dabei ergibt sich genauso wieder ein Vorzugsrichtung 130. Sodass der reflektierte Strahl 910 nach radial außen reflektiert wird und so weiter geleitet werden kann und der Strahl 911 entgegen der Vorzugsrichtung weiter in Richtung der Rotationsachse reflektiert wird und damit mit dem freibleibenden Bereich im Inneren 170 kollidiert und damit potentiell verloren geht.

Auf die alternative Umsetzung mit Spiegelelementen kann ebenfalls eine Variante mit mehreren Sender nach Fig. 7 angewandt werden als auch eine Anordnung ohne Symmetrie zum Empfänger wie in Fig. 8.

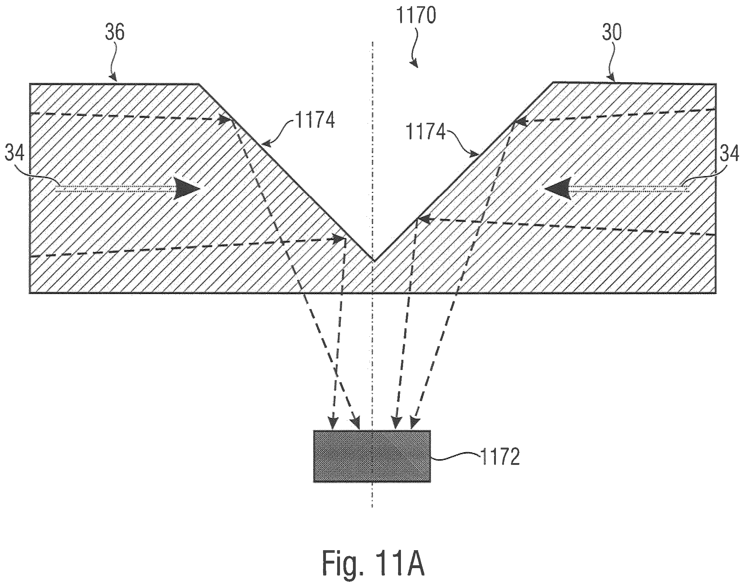

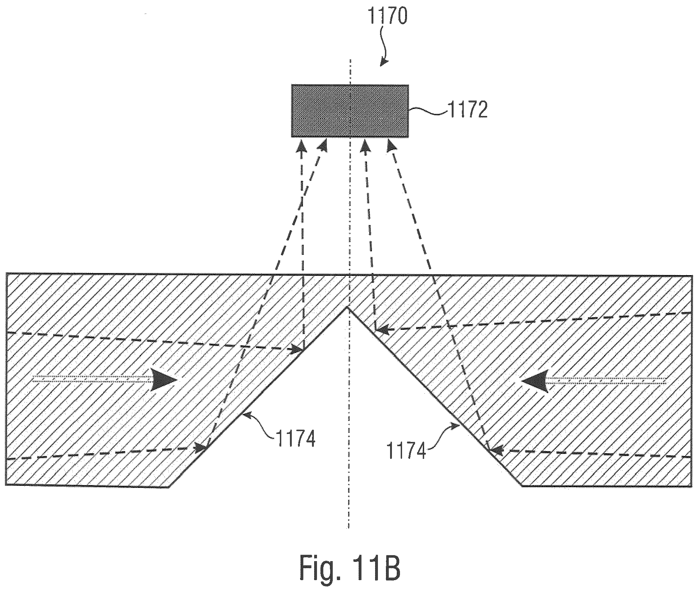

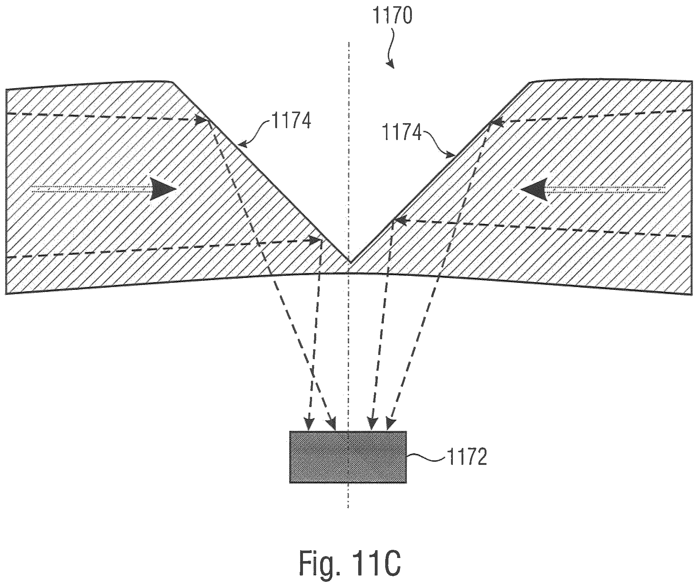

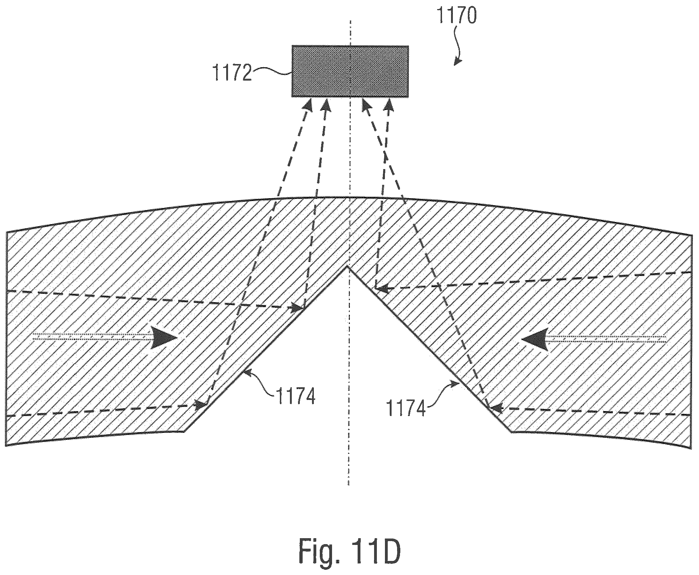

Die Figuren 11A, 11B, 11C, 11D zeigen schematische Darstellungen von Beispielen einer Empfangseinrichtung 1170 gemäß Beispielen der vorliegenden Offenbarung. Die Empfangseinrichtungen 1170 beinhalten Beispiele potentieller Auskoppelstrukturen und Anordnungen eines Empfängers 1172, beispielsweise eines Detektors. Die Empfangseinrichtung 1170 kann der Empfangseinrichtung 70, 140 entsprechen. Die Empfangseinrichtung 1170 weist einen Empfänger 1172 und Auskoppelstrukturelemente 1174 auf, die jeweils ausgelegt sind, um Licht, welches das tangentiale Ende jeweils eines Lichtpfadsegments 30 erreicht, aus dem Lichtpfad auszukoppeln. Die Auskopplung kann in einer ersten axialen Richtung (Fig. 11A), oder in einer zweiten axialen Richtung (Fig. 11B) erfolgen. Eine axiale Richtung ist eine Richtung senkrecht zu der radialen Richtung und der tangentialen Richtung, also z.B. eine Richtung senkrecht zu der Zeichenebene der Fig. 13.

Alternativ kann die Auskopplung in radialer Richtung nach innen (Fig. 11C), außen (Fig. 11D) stattfinden. Es sind auch Auskopplungsrichtungen möglich, welche sowohl eine Komponente in axialer als auch eine Komponente in radialer Richtung haben. Die Auskopplungsrichtung kann auch eine Komponente in tangentialer Richtung haben.

Im Folgenden wird die Keilform beschrieben, wie sie die Lichtpfadelemente 40, 121 bilden können. Obwohl die zueinander geneigten Flächen im Folgenden gegenüberliegend gezeigt sind, trifft die Beschreibung äquivalent auch für Beispiele zu, in denen die ersten und zweiten Grenzflächen tangential zueinander verschoben sind.

Fig. 12 zeigt eine schematische Darstellung einer Einkopplung eines Lichtstrahls in ein keilförmiges Lichtleiterelement 1240 gemäß einem Beispiel der vorliegenden Offenbarung. Das Lichtleiterelement 1240 ist ein Beispiel für das Lichtpfadelement 40, 121. Auf der rechten Seite zeigt Fig. 12 eine typische planparallele Platte 1202 und wie ein Lichtstrahl diesen durchläuft. Dicke Linien stellen Aufstrahlen dar, welche den Großteil der optischen Leistung tragen.

Dünne Linien stellen die immer vorhandenen Fresnelreflexionen dar. Der Eingangsstrahl und der Ausgangsstrahl sind parallel zueinander. Totalreflexion ist nicht möglich. Lediglich ein Teil der optischen Leistung wird kurzzeitig in dem Lichtleiter geführt.

Um Totalreflexion an der zweiten Grenzfläche zu ermöglichen müssen die beiden Grenzflächen soweit zueinander verkippt werden (einen Keil bilden), bis Totalreflexion eintritt. Gleichzeitig muss der Einstrahlwinkel in die erste Grenzfläche schon sehr flach sein um die Keilform nicht zu extrem werden zu lassen. Dem gegenüber steht ein Anstieg der Fresnelverluste je flacher der Einfallswinkel wird. Bei Beispielen, je nach Brechungsindex der gewählten Materialien, kann oberhalb von 70° Einfallswinkel der Anteil der Fresnelreflexion ansteigen. In solchen Fällen kann ein Einfallswinkel von 70-75° als maximum angesehen werden. Gleichzeitig würde ein Einfallswinkel von 75° und einem Brechungsindex von 1,5 einen Keil mit etwa 2° erfordern um Totalreflexion zu ermöglichen. Wählt man einen steileren Winkel 1248 um die Fresnelverluste weiter zu reduzieren steigt dieser leicht. Demnach beträgt die Keilform vorteilhafterweise <~6°. Parallel polarisiertes Licht hilft weiter die Verluste gering zu halten oder alternativ den Keil schmaler zu gestalten.

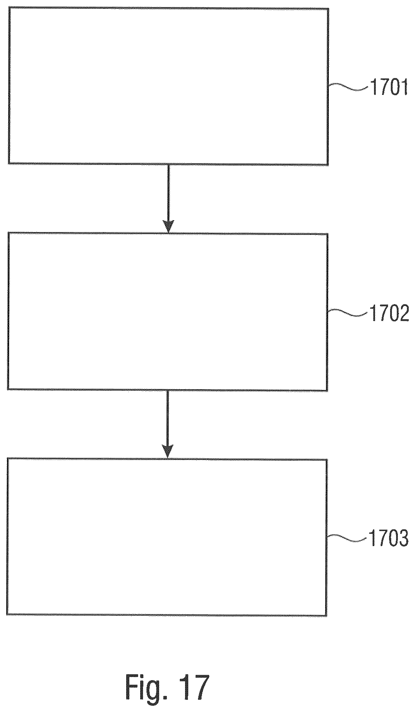

Fig. 17 zeigt ein Flussdiagramm eines Verfahren 1700 zum Übertragen eines Signals zwischen zwei zueinander rotierenden Einheiten unter Verwendung der optischen Vorrichtung 10, 300, 400, 500, 600, 700, 800, 900 das Verfahren 1700 weist folgende Schritte auf: Aussenden 1701 zumindest eines Lichtstrahls, welcher das Signal signalisiert; Einkoppeln 1702 zumindest eines der zumindest einen Lichtstrahlen in eines der zumindest einen Lichtpfadsegmente, so dass der eingekoppelte Lichtstrahl sich in der vorbestimmten Laufrichtung des Lichtpfadsegments ausbreitet; Detektieren 1703 des eingekoppelten Lichtstrahls, der sich in der vorbestimmten Laufrichtung ausgebreitet hat, mittels einer stationär zu dem Lichtpfad angeordneten Empfangseinrichtung.

Obwohl einige Aspekte der vorliegenden Offenbarung als Merkmale im Zusammenhang mit einer Vorrichtung beschrieben wurden, ist es klar, dass eine solche Beschreibung ebenfalls als eine Beschreibung entsprechender Verfahrensmerkmale betrachtet werden kann. Obwohl einige Aspekte als Merkmale im Zusammenhang mit einem Verfahren beschrieben wurden, ist klar, dass eine solche Beschreibung auch als eine Beschreibung entsprechender Merkmale einer Vorrichtung bzw. der Funktionalität einer Vorrichtung betrachtet werden können.

In der vorhergehenden detaillierten Beschreibung wurden teilweise verschiedene Merkmale in Beispielen zusammen gruppiert, um die Offenbarung zu rationalisieren. Diese Art der Offenbarung soll nicht als die Absicht interpretiert werden, dass die beanspruchten Beispiele mehr Merkmale aufweisen als ausdrücklich in jedem Anspruch angegeben sind. Vielmehr kann, wie die folgenden Ansprüche wiedergeben, der Gegenstand in weniger als allen Merkmalen eines einzelnen offenbarten Beispiels liegen. Folglich werden die folgenden Ansprüche hiermit in die detaillierte Beschreibung aufgenommen, wobei jeder Anspruch als ein eigenes separates Beispiel stehen kann.

Die oben beschriebenen Ausführungsbeispiele stellen lediglich eine Veranschaulichung der Prinzipien der vorliegenden Offenbarung dar. Es versteht sich, dass Modifikationen und Variationen der hierin beschriebenen Anordnungen und Einzelheiten anderen Fachleuten einleuchten werden. Deshalb ist beabsichtigt, dass die Offenbarung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Optische Vorrichtung (10, 300, 400, 500, 600, 700, 800, 900), die einen Lichtpfad (20) zum Leiten eines Lichtstrahls entlang eines Kreisbogens (11) aufweist,
wobei der Lichtpfad (20) zumindest ein Lichtpfadsegment (30, 30a, 30b, 334, 336, 434, 436, 934, 936) aufweist, das eine Anzahl tangential entlang des Lichtpfads angeordneter Lichtpfadelemente (40, 121) aufweist, wobei jedes der Lichtpfadelemente (40, 121) in einer radialen Richtung zumindest teilweise von einer ersten Grenzfläche (42, 342, 442) begrenzt ist,
**dadurch gekennzeichnet, dass**
die ersten Grenzflächen (42, 342, 442) eines jeweiligen Lichtpfadsegments (30) jeweils ausgebildet sind, um zumindest Licht, welches von dem Lichtpfad mit einem Einfallswinkel größer als ein vorbestimmter Winkel auf die jeweilige erste Grenzfläche (42, 342, 442) trifft, zu reflektieren, um einen sich in einer für das jeweilige Lichtpfadsegment (30) vorbestimmten Laufrichtung (34) entlang des Lichtpfads (20) ausbreitenden Lichtstrahl auf dem Lichtpfad (20) zu halten, und
ein erstes tangentiales Ende (44) der ersten Grenzflächen (42, 342, 442) radial weiter vom Kreismittelpunkt (12) des Kreisbogens (11) beabstandet ist, als ein zweites tangentiales Ende (46), um eine Vorzugsrichtung für die Ausbreitung eines Lichtstrahls entlang des Lichtpfads in der vorbestimmten Laufrichtung innerhalb des Lichtpfadsegments (30) zu schaffen.

2. Optische Vorrichtung (10, 300, 400, 500, 600, 700, 800, 900) gemäß Anspruch 1, wobei jede der ersten Grenzflächen (42, 342, 442) eines jeweiligen Lichtpfadsegments (30) so ausgebildet ist, dass für jeden Punkt (43) der ersten Grenzflächen (42, 342, 442) eine Oberflächennormale (45) gegenüber einer Verbindungslinie (47) zwischen dem jeweiligen Punkt (43) der ersten Grenzfläche (42, 342, 442) und dem Kreismittelpunkt (12) des Kreisbogens (11) innerhalb der Kreisebene des Kreisbogens (11) in einer für das jeweilige Lichtpfadsegment (30) vorbestimmten Rotationsrichtung (49) rotiert ist.

3. Optische Vorrichtung (10, 300, 400, 500, 600, 700, 800, 900) gemäß einem der Ansprüche 1 oder 2, wobei ein jeweiliger Schnitt der ersten Grenzflächen (42, 342, 442) in der Kreisebene des Kreisbogens (11) bezüglich des Kreismittelpunkts konvex oder plan ist.

4. Optische Vorrichtung (10, 300, 400, 500, 600, 700, 800, 900) gemäß einem der vorhergehenden Ansprüche, wobei ein Schnitt einer jeden der ersten Grenzflächen (42, 342, 442) in der Kreisebene des Kreisbogens (11) jeweils einen Grenzflächen-Kreisbogen beschreibt.

5. Optische Vorrichtung (10, 300, 400, 500, 600, 700, 800, 900) gemäß einem der vorhergehenden Ansprüche, wobei das zumindest eine Lichtpfadsegment zumindest ein erstes Lichtpfadsegment (30a) und ein zweites Lichtpfadsegment (30b) beinhaltet, wobei die für das erste Lichtpfadsegment (30a) und das zweite Lichtpfadsegment (30b) jeweils vorbestimmten Laufrichtungen (34a, 34b) gegensätzlich sind.

6. Optische Vorrichtung (10, 300, 400, 500, 600, 700, 800, 900) gemäß einem der vorhergehenden Ansprüche, ferner eine stationär zu dem Lichtpfad angeordnete Empfangseinrichtung (70) aufweisend, welche ausgebildet ist, um Licht, welches eines der zumindest einen Lichtpfadsegmente (30) in der vorbestimmten Laufrichtung (34) des jeweiligen Lichtpfadsegments (30) durchläuft, zu detektieren.

7. Optische Vorrichtung (10, 900) gemäß einem der vorhergehenden Ansprüche, wobei die ersten Grenzflächen (42) den Lichtpfad (20) in radialer Richtung nach außen begrenzen und wobei die ersten Grenzflächen (42) als Spiegel für das Licht des Lichtpfads (20) ausgebildet sind, um Licht, welches von dem Lichtpfad auf die jeweilige erste Grenzfläche (42) trifft, zu reflektieren.

8. Optische Vorrichtung (10, 900) gemäß Anspruch 7, wobei die ersten Grenzflächen (42) entlang der axialen Richtung des Kreisbogens konvex bezüglich des Kreismittelpunkts (12) des Kreisbogens ausgebildet sind.

9. Optische Vorrichtung (10, 300, 400, 500, 600, 700, 800) gemäß einem der Ansprüche 1 bis 6, wobei die Lichtpfadelemente (40, 121) von einem oder mehreren Lichtleitern gebildet sind,
wobei jedes der Lichtpfadelemente (40, 121) entlang einer radialen Richtung nach innen und nach außen zumindest teilweise von jeweils einer unterschiedlichen aus der ersten Grenzfläche (42, 342, 442) und einer zweiten Grenzfläche (352, 452) begrenzt ist,
wobei die zweiten Grenzflächen (342, 452) der Lichtpfadelemente jeweils ausgebildet sind, um Licht, welches von dem Lichtpfad mit einem Einfallswinkel größer als ein kritischer Winkel der jeweiligen zweiten Grenzfläche auf die jeweilige zweite Grenzfläche trifft, zu reflektieren, um einen sich in einer für das jeweilige Lichtpfadsegment vorbestimmten Laufrichtung (34, 130) entlang des Lichtpfads ausbreitenden Lichtstrahl auf dem Lichtpfad zu halten, und
wobei die Lichtpfadelemente keilförmig sind und an einem ersten tangentialen Ende (44, 44a, 44b) in radialer Richtung eine größere Ausdehnung aufweisen als an einem zweiten tangentialen Ende (46, 46a, 46b).

10. Optische Vorrichtung (10, 300, 500, 600, 700, 800) gemäß Anspruch 9, wobei die ersten Grenzflächen (42, 342) die Lichtpfadsegmente (30, 334, 336) in radialer Richtung nach außen begrenzen, wobei die zweiten Grenzflächen (352) die Lichtpfadsegmente in radialer Richtung nach innen begrenzen,
wobei die zweiten Grenzflächen (352, 452) entsprechend der ersten Grenzflächen ausgebildet sind, wobei das erste tangentiale Ende (44a) der ersten Grenzflächen (342) eines jeweiligen Lichtpfadelements dem zweiten tangentialen Ende (44b) der zweiten Grenzfläche (352) des jeweiligen Lichtpfadelements in radialer Richtung gegenüberliegt.

11. Optische Vorrichtung (10, 300, 500, 600, 700, 800) gemäß Anspruch 9, wobei die ersten Grenzflächen (42, 342) die Lichtpfadsegmente in radialer Richtung nach außen begrenzen, wobei die zweiten Grenzflächen (352) die Lichtpfadsegmente in radialer Richtung nach innen begrenzen,
wobei für die ersten Grenzflächen (352) eines jeweiligen Lichtpfadsegments (334, 336) die Richtung, entlang derer man von dem ersten tangentialen Ende (44a) entlang der jeweiligen ersten Grenzfläche (352) zu dem zweigen tangentialen Ende (46a) gelangt, der für das jeweilige Lichtpfadsegment (334, 336) vorbestimmten Laufrichtung (130) entgegengesetzt ist, und für die zweiten Grenzflächen (352) eines jeweiligen Lichtpfadsegments (334, 336) die Richtung, entlang derer man von dem ersten tangentialen Ende (44b) entlang der jeweiligen zweiten Grenzfläche zu dem zweiten tangentialen Ende (46b) gelangt, der für das jeweilige Lichtpfadsegment (334, 336) vorbestimmten Laufrichtung entspricht.

12. Optische Vorrichtung (10, 400) gemäß Anspruch 11, wobei die ersten und die zweiten Grenzflächen in tangentialer Richtung zum Lichtpfad (20) zueinander verschoben angeordnet sind.

13. Optische Vorrichtung (10, 400) gemäß Anspruch 9, wobei die zweiten Grenzflächen (352, 452) eines jeweiligen Lichtpfadsegments zusammen einen Kreisbogen um den Kreismittelpunkt des Lichtpfads bilden.

14. Optische Vorrichtung (10, 300, 400, 500, 600, 700, 800) gemäß einem der Ansprüche 9 bis 13, wobei die die Lichtpfadelemente (40, 121) radial nach außen begrenzenden Grenzflächen (342, 442, 452) entlang der axialen Richtung des Kreisbogens konvex bezüglich des Kreismittelpunkts (12) des Kreisbogens (11) ausgebildet sind, und wobei die die Lichtpfadelemente radial nach innen begrenzenden Grenzflächen (352, 442, 452) entlang der axialen Richtung des Kreisbogens konkav bezüglich des Kreismittelpunkts (12) des Kreisbogens ausgebildet sind.

15. Optische Vorrichtung (10, 300, 400, 500, 600, 700, 800) gemäß einem der Ansprüche 9 bis 14, wobei ein Keilwinkel (1248) zwischen jeweils einer der ersten Grenzflächen (342, 442) und einer der zweiten Grenzflächen (352, 452) in einem Bereich zwischen 1° und 10° oder in einem Bereich zwischen 2° und 6° liegt, wobei der Keilwinkel die Summe eines ersten Winkels der jeweiligen ersten Grenzfläche (342, 442) und eines zweiten Winkels der jeweiligen zweiten Grenzfläche ist,
wobei der erste Winkel der kleinste Winkel zwischen der Verbindungslinie zwischen dem ersten tangentialen Ende und dem zweiten tangentialen Ende der jeweiligen ersten Grenzfläche (342, 442) und der Tangente an den Kreisbogen des Lichtpfads in einem Punkt, der in tangentialer Richtung mittig zwischen dem ersten tangentialen Ende und dem zweiten tangentialen Ende der jeweiligen ersten Grenzfläche liegt, ist, und
wobei der zweite Winkel der kleinste Winkel zwischen der Verbindungslinie zwischen dem ersten tangentialen Ende und dem zweiten tangentialen Ende der jeweiligen zweiten Grenzfläche (352, 452) und der Tangente an den Kreisbogen des Lichtpfads in einem Punkt, der in tangentialer Richtung mittig zwischen dem ersten tangentialen Ende und dem zweiten tangentialen Ende der jeweiligen zweiten Grenzfläche liegt, ist.

16. Optische Vorrichtung (10, 300, 400, 500, 600, 700, 800) gemäß einem der vorhergehenden Ansprüche, ferner zumindest eine Sendeeinheit (80a, 80b, 150, 150a, 150b, 150c, 150d) aufweisend, wobei die zumindest eine Sendeeinheit und der Lichtpfad (20) so angeordnet sind, dass die zumindest eine Sendeeinheit auf einer zu dem Lichtpfad konzentrischen Kreisbahn (86) relativ zu dem Lichtpfad rotierbar ist,
wobei die zumindest eine Sendeeinheit ausgebildet ist, um zumindest einen Lichtstrahl (82a-1, 82a-2, 82b-1, 82b-2, 110, 110a, 110b, 111, 111a, 111b), welcher ein Signal signalisiert, in Richtung der Kreisbahn (11) des Lichtpfads (20) auszusenden.

17. Optische Vorrichtung (10, 400) gemäß Anspruch 16 wenn abhängig von einem der Ansprüche 7 oder 8,
wobei der Radius der konzentrischen Kreisbahn (86) kleiner als der Radius des Kreisbogens (11) des Lichtpfads ist, und
wobei die Abstrahlrichtung des zumindest einen Lichtstrahls so gewählt ist, dass der zumindest eine Lichtstrahl bei einer Reflexion an einer der ersten Grenzflächen (42) eines des zumindest einen Lichtpfadsegments (30, 30a, 30b) in den Lichtpfad einkoppelt.

18. Optische Vorrichtung (10, 300, 400, 500, 600, 700, 800) gemäß Anspruch 16 wenn abhängig von einem der Ansprüche 9 bis 15,
wobei der Radius der konzentrischen Kreisbahn (86) kleiner oder größer als der Radius des Kreisbogens (11) des Lichtpfads ist, und
wobei die Abstrahlrichtung des zumindest einen Lichtstrahls so gewählt ist, dass der zumindest eine Lichtstrahl bei einem Auftreffen auf eine der ersten Grenzflächen (342, 442) oder der zweiten Grenzfläche (352, 452) eines des zumindest einen Lichtpfadsegments (30, 30a, 30b, 334, 336, 434, 436) durch Brechung in den Lichtpfad einkoppelt.

19. Optische Vorrichtung (10, 300, 400, 500, 600, 700, 800) gemäß Anspruch 18, wobei die Abstrahlrichtung des zumindest einen Lichtstrahls (82a-1, 82a-2, 82b-1, 82b-2, 110a, 110b, 111a, 111b) so gewählt ist, dass der Einfallswinkel des zumindest einen Lichtstrahls beim Auftreffen auf eine der ersten oder zweiten Grenzflächen weniger als 80° beträgt, oder weniger als 75° beträgt, oder in einem Bereich zwischen 60° und 80° liegt, oder in einem Bereich zwischen 65° und 75° liegt.

20. Optische Vorrichtung (10, 300, 400, 500, 600, 700, 800, 900) gemäß Anspruch 16,
wobei das zumindest eine Lichtpfadsegment ein erstes Lichtpfadsegment (30a, 334, 434, 934) und ein zweites Lichtpfadsegment (30b, 336, 436, 936) beinhaltet, und
wobei eine tangentiale Komponente des Richtungsvektors des ersten Lichtstrahls in die vorbestimmte Laufrichtung (34a, 130) des ersten Lichtpfadsegments zeigt, und eine tangentiale Komponente des Richtungsvektors des zweiten Lichtstrahls in die vorbestimmte Laufrichtung (34b, 130) des zweiten Lichtpfadsegments zeigt.

21. Optische Vorrichtung (700) gemäß einem der Ansprüche 15 bis 18, wobei der Lichtpfad einen n-ten Bruchteil eines ganzen Kreises umfasst und wobei die zumindest eine Sendeeinheit eine Anzahl von n Sendeeinheit beinhaltet, welche gleichverteilt auf der konzentrischen Kreisbahn angeordnet sind.

22. Verfahren zum Übertragen eines Signals zwischen zwei zueinander rotierenden Einheiten unter Verwendung einer optischen Vorrichtung gemäß einem der vorhergehenden Ansprüche, aufweisend:
Aussenden (1701) zumindest eines Lichtstrahls, welcher das Signal signalisiert,
Einkoppeln (1701) zumindest eines der zumindest einen Lichtstrahlen in eines der zumindest einen Lichtpfadsegmente, so dass der eingekoppelte Lichtstrahl sich in der vorbestimmten Laufrichtung des Lichtpfadsegments ausbreitet,
Detektieren (1701) des eingekoppelten Lichtstrahls, der sich in der vorbestimmten Laufrichtung ausgebreitet hat, mittels einer stationär zu dem Lichtpfad angeordneten Empfangseinrichtung.

## Claims

1. Optical device (10, 300, 400, 500, 600, 700, 800, 900) comprising a light path (20) for guiding a light beam along a circular arc (11),
wherein the light path (20) comprises at least one light path segment (30, 30a, 30b, 334, 336, 434, 436, 934, 936) comprising a number of light path elements (40, 121) arranged tangentially along the light path, each of the light path elements (40, 121) being at least partially limited in a radial direction by a first interface (42, 342, 442),
**characterized in that**
the first interfaces (42, 342, 442) of a respective light path segment (30) are each configured to reflect at least light incident from the light path at an angle of incidence greater than a predetermined angle onto the respective first interface (42, 342, 442) to keep a light beam propagating along the light path (20) in a direction of travel (34) predetermined for the respective light path segment (30) on the light path (20); and
a first tangential end (44) of the first interfaces (42, 342, 442) is spaced radially further apart from the center of the circle (12) of the circular arc (11) than a second tangential end (46) to create a preferential direction for the propagation of a light beam along the light path in the predetermined direction of travel within the light path segment (30).

2. Optical device (10, 300, 400, 500, 600, 700, 800, 900) according to claim 1, wherein each of the first interfaces (42, 342, 442) of a respective light path segment (30) is configured such that, for each point (43) of the first interfaces (42, 342, 442), a surface normal (45) is rotated with respect to a connecting line (47) between the respective point (43) of the first interfaces (42, 342, 442) and the center of the circle (12) of the circular arc (11) within the circular plane of the circular arc (11) in a direction of rotation (49) predetermined for the respective light path segment (30).

3. Optical device (10, 300, 400, 500, 600, 700, 800, 900) according to any one of claims 1 or 2, wherein a respective intersection of the first interfaces (42, 342, 442) in the circular plane of the circular arc (11) is convex or planar with respect to the center of the circle.

4. Optical device (10, 300, 400, 500, 600, 700, 800, 900) according to any one of the preceding claims, wherein an intersection of each of the first interfaces (42, 342, 442) in the circular plane of the circular arc (11) describes a respective interface circular arc.

5. Optical device (10, 300, 400, 500, 600, 700, 800, 900) according to any one of the preceding claims, wherein the at least one light path segment includes at least a first light path segment (30a) and a second light path segment (30b), wherein the respective directions of travel (34a, 34b) predetermined for the first light path segment (30a) and the second light path segment (30b) are opposite.

6. Optical device (10, 300, 400, 500, 600, 700, 800, 900) according to any one of the preceding claims, further comprising receiving means (70) arranged stationary with respect to the light path and configured to detect light passing through one of the at least one light path segments (30) in the predetermined direction of travel (34) of the respective light path segment (30).

7. Optical device (10, 900) according to any one of the preceding claims, wherein the first interfaces (42) limit the light path (20) radially outward, and wherein the first interfaces (42) are configured as mirrors for the light from the light path (20) to reflect light incident from the light path onto the respective first interface (42).

8. Optical device (10, 900) according to claim 7, wherein the first interfaces (42) are configured in a convex manner along the axial direction of the circular arc with respect to the center of the circle (12) of the circular arc.

9. Optical device (10, 300, 400, 500, 600, 700, 800) according to any one of claims 1 to 6, wherein the light path elements (40, 121) are formed by one or several optical fibers,
wherein each of the light path elements (40, 121) is at least partially limited radially inward and outward by a respective different one of the first interface (42, 342, 442) and a second interface (352, 452),
wherein the second interfaces (342, 452) of the light path elements are each configured to reflect light incident from the light path at an angle of incidence greater than a critical angle of the respective second interface onto the respective second interface to keep a light beam propagating along the light path in a predetermined direction of travel (34, 130) for the respective light path segment on the light path, and
wherein the light path elements are wedge-shaped and have a greater expansion in the radial direction at a first tangential end (44, 44a, 44b) than at a second tangential end (46, 46a, 46b).

10. Optical device (10, 300, 500, 600, 700, 800) according to claim 9, wherein the first interfaces (42, 342) limit the light path segments (30, 334, 336) radially outward, wherein the second interfaces (352) limit the light path segments radially inward,
wherein the second interfaces (352, 452) are configured in accordance with the first interfaces, wherein the first tangential end (44a) of the first interfaces (342) of a respective light path element is opposite to the second tangential end (44b) of the second interface (352) of the respective light path element in radial direction.

11. Optical device (10, 300, 500, 600, 700, 800) according to claim 9, wherein the first interfaces (42, 342) limit the light path segments radially outward, wherein the second interfaces (352) limit the light path segments radially inward,
wherein for the first interfaces (352) of a respective light path segment (334, 336), the direction of travel from the first tangential end (44a) along the respective first interface (352) to the second tangential end (46a) is opposite to the direction of travel (130) predetermined for the respective light path segment (334, 336), and for the second interfaces (352) of a respective light path segment (334, 336), the direction of travel from the first tangential end (44b) along the respective second interface to the second tangential end (46b) corresponds to the direction of travel predetermined for the respective light path segment (334, 336).

12. Optical device (10, 400) according to claim 11, wherein the first and the second interfaces are arranged offset from each other in a direction tangential to the light path (20).

13. Optical device (10, 400) according to claim 9, wherein the second interfaces (352, 452) of a respective light path segment together form a circular arc around the center of the circle of the light path.

14. Optical device (10, 300, 400, 500, 600, 700, 800) according to any one of claims 9 to 13, wherein the interfaces (342, 442, 452) limiting the light path elements (40, 121) radially outward are configured in a convex manner along the axial direction of the circular arc with respect to the center of the circle (12) of the circular arc (11), and wherein the interfaces (352, 442, 452) limiting the light path elements radially inward are configured in a concave manner along the axial direction of the circular arc with respect to the center of the circle (12) of the circular arc.

15. Optical device (10, 300, 400, 500, 600, 700, 800) according to any one of claims 9 to 14, wherein a wedge angle (1248) between a respective one of the first interfaces (342, 442) and one of the second interfaces (352, 452) is in a range between 1° and 10° or in a range between 2° and 6°, wherein the wedge angle is the sum of a first angle of the respective first interface (342, 442) and a second angle of the respective second interface,
wherein the first angle is the smallest angle between the line connecting the first tangential end and the second tangential end of the respective first interface (342, 442) and the tangent to the circular arc of the light path at a point centered in tangential direction between the first tangential end and the second tangential end of the respective first interface, and
wherein the second angle is the smallest angle between the line connecting the first tangential end and the second tangential end of the respective second interface (352, 452) and the tangent to the circular arc of the light path at a point centered in tangential direction between the first tangential end and the second tangential end of the respective second interface.

16. Optical device (10, 300, 400, 500, 600, 700, 800) according to any one of the preceding claims, further comprising at least one transmitting unit (80a, 80b, 150, 150a, 150b, 150c, 150d), wherein the at least one transmitting unit and the light path (20) are arranged such that the at least one transmitting unit is rotatable relative to the light path on a circular path (86) concentric to the light path,
wherein the at least one transmitting unit is configured to emit at least one light beam (82a-1, 82a-2, 82b-1, 82b-2, 110, 110a, 110b, 111, 111a, 111b), which signals a signal, in the direction of the circular path (11) of the light path (20).

17. Optical device (10, 400) according to claim 16, when dependent on any one of claims 7 or 8,
wherein the radius of the concentric circular path (86) is smaller than the radius of the circular arc (11) of the light path, and
wherein the radiation direction of the at least one light beam is selected such that the at least one light beam is coupled into the light path upon reflection at one of the first interfaces (42) of one of the at least one light path segment (30, 30a, 30b).

18. Optical device (10, 300, 400, 500, 600, 700, 800) according to claim 16, when dependent on any one of claims 9 to 15,
wherein the radius of the concentric circular path (86) is smaller or larger than the radius of the circular arc (11) of the light path, and
wherein the radiation direction of the at least one light beam is selected such that the at least one light beam is coupled into the light path by refraction when incident on one of the first interfaces (342, 442) or the second interface (352, 452) of one of the at least one light path segments (30, 30a, 30b, 334, 336, 434, 436).

19. Optical device (10, 300, 400, 500, 600, 700, 800) according to claim 18, wherein the radiation direction of the at least one light beam (82a-1, 82a-2, 82b-1, 82b-2, 110a, 110b, 111a, 111b) is selected such that the angle of incidence of the at least one light beam when incident on one of the first or second interfaces is less than 80°, or less than 75°, or is in a range between 60° and 80°, or in a range between 65° and 75°.

20. Optical device (10, 300, 400, 500, 600, 700, 800, 900) according to claim 16,
wherein the at least one light path segment includes a first light path segment (30a, 334, 434, 934) and a second light path segment (30b, 336, 436, 936), and
wherein a tangential component of the directional vector of the first light beam points in the predetermined direction of travel (34a, 130) of the first light path segment, and a tangential component of the directional vector of the second light beam points in the predetermined direction of travel (34b, 130) of the second light path segment.

21. Optical device (700) according to any one of claims 15 to 18, wherein the light path comprises an n-th fraction of an entire circle and wherein the at least one transmitting unit includes a number of n transmitting unit that are equally distributed along the concentric circular path.

22. Method for transmitting a signal between two units rotating relative to each other using an optical device according to any one of the preceding claims, comprising:
emitting (1701) at least one light beam, which signals the signal,
coupling (1701) at least one of the at least one light beams into one of the at least one light path segments such that the coupled light beam propagates in the predetermined direction of travel of the light path segment,
detecting (1701) the coupled-in light beam that has propagated in the predetermined direction of travel by means of receiving means arranged stationary with respect to the light path.

## Revendications

1. Dispositif optique (10, 300, 400, 500, 600, 700, 800, 900) qui présente un trajet lumineux (20) pour guider un faisceau lumineux le long d'un arc de cercle (11),
dans lequel le trajet lumineux (20) présente au moins un segment de trajet lumineux (30, 30a, 30b, 334, 336, 434, 436, 934, 936) qui présente un nombre d'éléments de trajet lumineux (40, 121) disposés de manière tangentielle le long du trajet lumineux, chacun des éléments de trajet lumineux (40, 121) étant délimité dans une direction radiale au moins partiellement par une première interface (42, 342, 442),
**caractérisé en ce que**
les premières interfaces (42, 342, 442) d'un segment de trajet lumineux respectif (30) sont respectivement conçues pour réfléchir au moins la lumière qui atteint la première interface respective (42, 342, 442) depuis le trajet lumineux avec un angle d'incidence supérieur à un angle prédéterminé, afin de maintenir sur le trajet lumineux (20) un faisceau lumineux se propageant le long du trajet lumineux (20) dans une direction de déplacement (34) prédéterminée pour le segment de trajet lumineux respectif (30), et
une première extrémité tangentielle (44) des premières interfaces (42, 342, 442) est plus espacée radialement du centre de cercle (12) de l'arc de cercle (11) qu'une seconde extrémité tangentielle (46) afin de créer une direction préférée pour la propagation d'un faisceau lumineux le long du trajet lumineux dans la direction de déplacement prédéterminée à l'intérieur du segment de trajet lumineux (30).

2. Dispositif optique (10, 300, 400, 500, 600, 700, 800, 900) selon la revendication 1, dans lequel chacune des premières interfaces (42, 342, 442) d'un segment de trajet lumineux respectif (30) est conçue de telle sorte que, pour chaque point (43) des premières interfaces (42, 342, 442), une normale de surface (45) est tournée par rapport à une ligne de liaison (47) entre le point respectif (43) de la première interface (42, 342, 442) et le centre de cercle (12) de l'arc de cercle (11) à l'intérieur du plan circulaire de l'arc de cercle (11) dans une direction de rotation (49) prédéterminée pour le segment de trajet lumineux respectif (30).

3. Dispositif optique (10, 300, 400, 500, 600, 700, 800, 900) selon l'une des revendications 1 ou 2, dans lequel une section respective des premières interfaces (42, 342, 442) dans le plan circulaire de l'arc de cercle (11) est convexe ou plane par rapport au centre de cercle.

4. Dispositif optique (10, 300, 400, 500, 600, 700, 800, 900) selon l'une des revendications précédentes, dans lequel une section de chacune des premières interfaces (42, 342, 442) dans le plan circulaire de l'arc de cercle (11) décrit respectivement un arc de cercle d'interface.

5. Dispositif optique (10, 300, 400, 500, 600, 700, 800, 900) selon l'une des revendications précédentes, dans lequel l'au moins un segment de trajet lumineux contient au moins un premier segment de trajet lumineux (30a) et un second segment de trajet lumineux (30b), dans lequel les directions de déplacement (34a, 34b) respectivement prédéterminées pour le premier segment de trajet lumineux (30a) et le second segment de trajet lumineux (30b) sont contraires.

6. Dispositif optique (10, 300, 400, 500, 600, 700, 800, 900) selon l'une des revendications précédentes, présentant en outre un moyen de réception (70) qui est disposé de manière fixe par rapport au trajet lumineux et est conçu pour détecter la lumière qui traverse l'un des au moins un segment de trajet lumineux (30) dans la direction de déplacement prédéterminée (34) du segment de trajet lumineux respectif (30).

7. Dispositif optique (10, 900) selon l'une des revendications précédentes, dans lequel les premières interfaces (42) délimitent le trajet lumineux (20) dans la direction radiale vers l'extérieur et dans lequel les premières interfaces (42) sont conçues sous la forme de miroirs pour la lumière du trajet lumineux (20) afin de réfléchir la lumière qui atteint la première interface respective (42) depuis le trajet lumineux.

8. Dispositif optique (10, 900) selon la revendication 7, dans lequel les premières interfaces (42) sont conçues de manière convexe le long de la direction axiale de l'arc de cercle par rapport au centre de cercle (12) de l'arc de cercle.

9. Dispositif optique (10, 300, 400, 500, 600, 700, 800) selon l'une des revendications 1 à 6, dans lequel les éléments de trajet lumineux (40, 121) sont formés par un ou plusieurs guides de lumière,
dans lequel chacun des éléments de trajet lumineux (40, 121) est délimité le long d'une direction radiale vers l'intérieur et vers l'extérieur au moins partiellement respectivement par une interface différente parmi la première interface (42, 342, 442) et une seconde interface (352, 452),
dans lequel les secondes interfaces (342, 452) des éléments de trajet lumineux sont conçues respectivement pour réfléchir la lumière qui atteint la seconde interface respective depuis le trajet lumineux avec un angle d'incidence supérieur à un angle critique de la seconde interface respective afin de maintenir sur le trajet lumineux un faisceau lumineux se propageant le long du trajet lumineux dans une direction de déplacement (34, 130) prédéterminée pour le segment de trajet lumineux respectif, et
dans lequel les éléments de trajet lumineux sont cunéiformes et présentent, au niveau d'une première extrémité tangentielle (44, 44a, 44b) dans la direction radiale, une plus grande étendue qu'au niveau d'une seconde extrémité tangentielle (46, 46a, 46b).

10. Dispositif optique (10, 300, 500, 600, 700, 800) selon la revendication 9, dans lequel les premières interfaces (42, 342) délimitent les segments de trajet lumineux (30, 334, 336) dans la direction radiale vers l'extérieur, les secondes interfaces (352) délimitant les segments de trajet lumineux dans la direction radiale vers l'intérieur,
dans lequel les secondes interfaces (352, 452) sont conçues de manière correspondante aux premières interfaces, dans lequel la première extrémité tangentielle (44a) des premières interfaces (342) d'un élément de trajet lumineux respectif est opposée dans la direction radiale à la seconde extrémité tangentielle (44b) de la seconde interface (352) de l'élément de trajet lumineux respectif.

11. Dispositif optique (10, 300, 500, 600, 700, 800) selon la revendication 9, dans lequel les premières interfaces (42, 342) délimitent les segments de trajet lumineux dans la direction radiale vers l'extérieur, les secondes interfaces (352) délimitant les segments de trajet lumineux dans la direction radiale vers l'intérieur,
dans lequel pour les premières interfaces (352) d'un segment de trajet lumineux respectif (334, 336) la direction le long de laquelle on parvient depuis la première extrémité tangentielle (44a) le long de la première interface respective (352) jusqu'à la seconde extrémité tangentielle (46a) est opposée à la direction de déplacement (130) prédéterminée pour le segment de trajet lumineux respectif (334, 336) et, pour les secondes interfaces (352) d'un segment de trajet lumineux respectif (334, 336), la direction le long de laquelle on parvient depuis la première extrémité tangentielle (44b) le long de la seconde interface respective jusqu'à la seconde extrémité tangentielle (46b) correspond à la direction de déplacement prédéterminée pour le segment de trajet lumineux respectif (334, 336).

12. Dispositif optique (10, 400) selon la revendication 11, dans lequel les premières et les secondes interfaces sont disposées de manière décalée les unes par rapport aux autres dans la direction tangentielle au trajet lumineux (20).

13. Dispositif optique (10, 400) selon la revendication 9, dans lequel les secondes interfaces (352, 452) d'un segment de trajet lumineux respectif forment conjointement un arc de cercle autour du centre de cercle du trajet lumineux.

14. Dispositif optique (10, 300, 400, 500, 600, 700, 800) selon l'une des revendications 9 à 13, dans lequel les interfaces (342, 442, 452) délimitant les éléments de trajet lumineux (40, 121) radialement vers l'extérieur sont conçues de manière convexe le long de la direction axiale de l'arc de cercle par rapport au centre de cercle (12) de l'arc de cercle (11), et dans lequel les interfaces (352, 442, 452) délimitant les éléments de trajet lumineux radialement vers l'intérieur sont conçues de manière concave le long de la direction axiale de l'arc de cercle par rapport au centre de cercle (12) de l'arc de cercle.

15. Dispositif optique (10, 300, 400, 500, 600, 700, 800) selon l'une des revendications 9 à 14, dans lequel un angle de coin (1248) respectivement entre une des premières interfaces (342, 442) et une des secondes interfaces (352, 452) se situe dans une plage comprise entre 1° et 10° ou dans une plage comprise entre 2° et 6°, dans lequel l'angle de coin est la somme d'un premier angle de la première interface respective (342, 442) et d'un second angle de la seconde interface respective,
dans lequel le premier angle est le plus petit angle entre la ligne de liaison entre la première extrémité tangentielle et la seconde extrémité tangentielle de la première interface respective (342, 442) et la tangente au niveau de l'arc de cercle du trajet lumineux dans un point qui se situe dans la direction tangentielle au centre entre la première extrémité tangentielle et la seconde extrémité tangentielle de la première interface respective, et
dans lequel le second angle est le plus petit angle entre la ligne de liaison entre la première extrémité tangentielle et la seconde extrémité tangentielle de la seconde interface respective (352, 452) et la tangente au niveau de l'arc de cercle du trajet lumineux dans un point qui se situe dans la direction tangentielle au centre entre la première extrémité tangentielle et la seconde extrémité tangentielle de la seconde interface respective.

16. Dispositif optique (10, 300, 400, 500, 600, 700, 800) selon l'une des revendications précédentes, présentant en outre au moins une unité d'émission (80a, 80b, 150, 150a, 150b, 150c, 150d), dans lequel l'au moins une unité d'émission et le trajet lumineux (20) sont disposés de telle sorte que l'au moins une unité d'émission puisse tourner par rapport au trajet lumineux sur une trajectoire circulaire (86) concentrique au trajet lumineux,
dans lequel l'au moins une unité d'émission est conçue pour émettre au moins un faisceau lumineux (82a-1, 82a-2, 82b-1, 82b-2, 110, 110a, 110b, 111, 111a, 111b), qui signale un signal, dans la direction de la trajectoire circulaire (11) du trajet lumineux (20).

17. Dispositif optique (10, 400) selon la revendication 16 lorsqu'elle est dépendante d'une des revendications 7 ou 8,
dans lequel le rayon de la trajectoire circulaire concentrique (86) est inférieur au rayon de l'arc de cercle (11) du trajet lumineux, et
dans lequel la direction d'émission de l'au moins un faisceau lumineux est choisie de telle sorte que l'au moins un faisceau lumineux se couple dans le trajet lumineux lors d'une réflexion au niveau d'une des premières interfaces (42) de l'un des au moins un segment de trajet lumineux (30, 30a, 30b).

18. Dispositif optique (10, 300, 400, 500, 600, 700, 800) selon la revendication 16 lorsqu'elle est dépendante d'une des revendications 9 à 15,
dans lequel le rayon de la trajectoire circulaire concentrique (86) est inférieur ou supérieur au rayon de l'arc de cercle (11) du trajet lumineux, et
dans lequel la direction d'émission de l'au moins un faisceau lumineux est choisie de telle sorte que l'au moins un faisceau lumineux se couple par réfraction dans le trajet lumineux lors de la rencontre avec l'une des premières interfaces (342, 442) ou la seconde interface (352, 452) de l'un des au moins un segment de trajet lumineux (30, 30a, 30b, 334, 336, 434, 436).

19. Dispositif optique (10, 300, 400, 500, 600, 700, 800) selon la revendication 18, dans lequel la direction d'émission de l'au moins un faisceau lumineux (82a-1, 82a-2, 82b-1, 82b-2, 110a, 110b, 111a, 111b) est choisie de telle sorte que l'angle d'incidence de l'au moins un faisceau lumineux, lors de la rencontre avec l'une des premières ou secondes interfaces, est inférieur à 80°, ou est inférieur à 75°, ou se situe dans une plage comprise entre 60° et 80°, ou se situe dans une plage comprise entre 65° et 75°.

20. Dispositif optique (10, 300, 400, 500, 600, 700, 800, 900) selon la revendication 16,
dans lequel l'au moins un segment de trajet lumineux contient un premier segment de trajet lumineux (30a, 334, 434, 934) et un second segment de trajet lumineux (30b, 336, 436, 936), et
dans lequel une composante tangentielle du vecteur de direction du premier faisceau lumineux pointe dans la direction de déplacement prédéterminée (34a, 130) du premier segment de trajet lumineux, et une composante tangentielle du vecteur de direction du second faisceau lumineux pointe dans la direction de déplacement prédéterminée (34b, 130) du second segment de trajet lumineux.

21. Dispositif optique (700) selon l'une des revendications 15 à 18, dans lequel le trajet lumineux comprend une n-ième fraction d'un cercle entier et dans lequel l'au moins une unité d'émission contient un nombre de n unités d'émission qui sont disposées régulièrement réparties sur la trajectoire circulaire concentrique.

22. Procédé destiné à transmettre un signal entre deux unités rotatives l'une par rapport à l'autre en utilisant un dispositif optique selon l'une des revendications précédentes, présentant :
émettre (1701) au moins un faisceau lumineux qui signale le signal,
coupler (1701) au moins l'un des au moins un faisceau lumineux dans l'un des au moins un segment de trajet lumineux, de telle sorte que le faisceau lumineux couplé se propage dans la direction de déplacement prédéterminée du segment de trajet lumineux,
détecter (1701) le faisceau lumineux couplé qui s'est propagé dans la direction de déplacement prédéterminée, à l'aide d'un moyen de réception disposé de manière fixe par rapport au trajet lumineux.
